Europäisches Patentamt

European Patent Office

Office européen des brevets

(19)

(11)  EP 1 489 046 A1

(12)  **EUROPEAN PATENT APPLICATION**
published in accordance with Art. 158(3) EPC

(43) Date of publication:
22.12.2004 Bulletin 2004/52

(51) Int Cl.⁷: **C01B 3/02**, C10J 3/00,
C10G 9/00, C10G 35/04

(21) Application number: 02758857.3

(22) Date of filing: 20.08.2002

(86) International application number:
PCT/JP2002/008366

(87) International publication number:
WO 2003/016210 (27.02.2003 Gazette 2003/09)

(84) Designated Contracting States:
AT BE DE GB

(30) Priority: 21.08.2001 JP 2001249779
11.01.2002 JP 2002005146
25.06.2002 JP 2002184517

(71) Applicant: Mitsubishi Materials Corporation
Chiyoda-ku, Tokyo 100-004 (JP)

(72) Inventors:
• TANAKA, Hiroshi,
Mitsubishi Materials Corporation
Tokyo 100-0004 (JP)
• OTA, Kazuaki, Mitsubishi Materials Corporation
Tokyo 100-0004 (JP)

• DAI, Wenbin, Mitsubishi Materials Corporation
Tokyo 100-0004 (JP)
• SAIKI, Wataru, Mitsubishi Materials Corporation
Tokyo 100-0004 (JP)
• BAI, Gang, Mitsubishi Materials Corporation
Tokyo 100-0004 (JP)
• MORI, Ryouhei,
Mitsubishi Materials Corporation
Tokyo 100-0004 (JP)

(74) Representative: HOFFMANN - EITLE
Patent- und Rechtsanwälte
Arabellastrasse 4
81925 München (DE)

(54)  **METHOD AND APPARATUS FOR RECYCLING HYDROCARBON RESOURCE**

(57)    An apparatus as a suitable embodiment, wherein a reactor (102) has a nozzle (means for supplying a raw material, an oxidizing agent and water) (103), a high temperature and high pressure gas formed by reacting the raw material with oxygen or the like in an oxidizing agent under a water-containing atmosphere is introduced to a heat exchanger (104) which is provided between a pressure vessel (101) and the reactor (102), the pressure vessel (101) has a water inlet (114) connected with a water supply line (106) and an opening (117) for a discharge line (105) for a formed gas which is connected with the heat exchanger (104), and the nozzle (103) has a flow route for supplying water present between the pressure vessel (101) and the reactor (102) to the inside of the reactor (102); and a method for pyrolysis and gasification using the apparatus. The apparatus can be used for carrying out the pyrolysis of a hydrocarbon material with good efficiency, without the use of a catalyst and the supply of hydrogen from outside, and for improving the yield of an oil fraction and a pyrolysis gas, through gasifying the residue generated as a result of pyrolysis into a combustion gas to thereby use the whole of the material. Further, the method allows the separation of metal impurities in a raw material as s solid, which leads to the reuse of such metal impurities as a resource.

FIG.9

**Description**

Technical Field

The present invention relates to a technique for increasing a recycle rate and improving economical efficiency in production sites by reforming heavy materials produced in oil refining or coal liquefaction industry, such as atmospheric residues and vacuum residues, natural heavy oil or the like, and converting raw materials originating from oil based products, such as waste plastics.

Furthermore, the present invention relates to a high-temperature and high-pressure water atmosphere reaction processing apparatus for making reproducible recycle resources including fossil fuels such as coal, oil and natural tar, organic wastes such as waste plastics and sewage sludge, and biomasses, and the like, undergo a reaction under an atmosphere of high-temperature and high-pressure water to recover energy from these resources or reform these resources into light fuels.

Furthermore, the present invention relates to a method and apparatus for reforming hydrocarbon based heavy raw materials such as atmospheric residues and vacuum residues in oil refining equipment, natural heavy oil and refractory wastes to obtain lighter raw materials.

In addition, the present invention relates to a method for gasification of a hydrocarbon based material for obtaining useful hydrogen gas from various kinds of hydrocarbon based raw materials such as hydrocarbon resources and hydrocarbon based wastes.

Background Art

Recently, demands for heavy oil so called "black products" in oil products have been decreasing because of their significant influences on the environment and the like and as a result, heavy oil such as vacuum residues obtained as a byproduct from oil refining has accumulated.

In addition, oil has become heavier due to the properties of crude oil, and the production ratio of heavy oil will increase compared to product yields of naphtha, gasoline, kerosine, light oil and the like in oil refining in the future, thus making more serious the problem of accumulation of heavy oil.

In addition, for the process for processing heavy oil, the Eureka process, the HSC process and the like have been used for a long time but in any case, reaction residues and the like are still produced although light components are partly collected from heavy oil by thermal cracking, and it is thus necessary to find how the reaction residues should be used in consideration of the use environment described above.

A gasification technique has been burgeoning as a method for processing the heavy oil, but the method requires complicated processing equipment to raise an economy-related problem because there are influences of impure metals, and a form of a sulfur compound in the gas, or the like, is complicated.

In addition, in oil refining, there is still a problem of how to increase a yield of product oil from crude oil.

Furthermore, in thermal cracking in high-temperature and high-pressure water including supercritical water, heavy oil can be converted into oil of high quality, and in gasification in high-temperature and high-pressure water including supercritical water, heavy oil, solid residues and the like can be efficiently gasified, and a form of a sulfur compound produced with gasification is simplified, thus making it possible to ease the gas processing.

On the other hand, in oil refining industries, it has been increasingly required to recycle waste plastics being oil products, save resources and reduce burdens on the environment.

Furthermore, the various needs described above have been also growing in improvement of coal liquefaction as other raw materials.

In addition, for the high-temperature and high-pressure water atmosphere reaction processing apparatus described above, for example, those described in Japanese Patent Laid-Open No. 7-313987, Japanese Patent Laid-Open No. 2000-239672 and Japanese Patent Laid-Open No. 2001-232381 are known. The high-temperature and high-pressure water atmosphere reaction processing apparatus is constituted by a double shell structure having an outer shell and an inner shell communicating with each other, and a raw material and an oxidant are supplied to the inner shell through a nozzle. The raw material is made to react with the oxidant under an atmosphere of high-temperature and high-pressure water in the inner shell, whereby the raw material is cracked into harmless gas such as $CO_2$, or cracked to produce a light hydrocarbon or the like. In addition, a fluids contributing to the reaction, for example water, an oxidant, a processing object liquid and the like are sent into between the outer shell and the inner shell under a pressure substantially equal to the pressure inside the inner shell to back up the inner shell from outside. The pressure fluid flows into a reaction area in the inner shell through a communication port between the outer and inner shells, and the inner shell functions as a partition wall partitioning the reaction area in such a manner as to receive no pressure.

That is, the inside of the inner shell has an elevated temperature and pressure due to the reaction between the raw material and the oxidant, and the like, and for enduring the elevated pressure with the inner shell itself, the inner shell should have a considerably large thickness.

In the shell, however, the temperature is elevated to 374°C, preferably 550°C or greater, and a corrosive halogen compound (e.g. hydrochloric acid (HC1)) and the like are produced, and therefore the inner shell should be made of metal material having heat resistance, corrosion resistance and the like. However, such a metal material is generally very expensive, and therefore if the thickness is simply increased to endure a high pressure, there arises a production-cost related problem.

Thus, the outer shell and the inner shell are made to communicate with each other, and the outside of the inner shell is backed up with the pressure fluid as described above to keep a balance between the inside and outside of the inner shell, whereby the inner shell can endure the pressure sufficiently even if it has a smaller thickness, thus achieving a reduction in cost. Furthermore, the outer shell never directly contacts high-temperature reaction gas or the like unlike the inner shell, and can be therefore made of usual steel material, thus making it possible to inhibit an increase in cost even if it has a large thickness.

In addition, in the example of the conventional technique, by making a modification to the inner shell, the pressure fluid flowing between the outer shell and the inner shell can be preheated to improve heat efficiency of apparatus.

For the reaction apparatus described above, however, Japanese Patent Laid-Open No. 2001-232382 discloses that mutual communication between the outer shell and the inner shell may cause a halogen compound or the like produced in the inner shell to flow into between the inner shell and the outer shell to corrode the outer shell when the apparatus is stopped urgently, for example. In the apparatus of this publication, the outer shell and the inner shell are blocked from each other so as to prevent mutual communication therebetween, whereby corrosion of the outer shell can be avoided. In addition, the pressure fluid sent into between the outer shell and the inner shell does not enter the inner shell, but is discharged to the outside of apparatus.

Furthermore, for example, in oil refining equipment, by cracking crude oil by atmospheric and vacuum, gas, naphtha, kerosine, light oil and the like can be obtained, and also heavy raw materials of vacuum residues having low additive values and decreasing demands are secondarily produced.

For the method for reforming the heavy raw material described above and collecting light oil, there are various kinds of methods such as hydrocracking, hydro-refining and thermal cracking.

In the hydrocracking and hydro-refining described above, a large amount of expensive hydrogen is supplied to carry out a reaction under the presence of a high-temperature and high-pressure catalyst, whereby the heavy raw material is reformed. Thus, there is a disadvantage that a large amount of expensive hydrogen is consumed, and equipment for producing and recycling the hydrogen is required. Thus, the cost-related problem is significant.

In addition, for the thermal cracking described above, there are the Eureka process and the HSC process, but these processes have a problem such that the yield of a lightened raw material obtained by reforming is low. Additionally, even the lightened raw material still has a high concentration of sulfur component, and is thus required to further undergo sulfur refinement for actual use. Thus, there also arises a significant cost-related problem.

Furthermore, direct use of the heavy raw material without reforming the same has the following problems. For example, by distilling atmospheric residues under a vacuum, heavy raw materials of heavy oil and asphalt are obtained, but the heavy oil has sulfur remaining at a high concentration, and thus has limited demands in terms of the environment, while the asphalt has further limited applications, and cannot be consumed with stability due to large variations in demands, and its storage tends to increase.

In addition, there is apprehension that as crude oil produced becomes heavier, intermediate fractions such as light oil and kerosine will decrease, and heavy raw materials such as atmospheric residues and vacuum residues will increase in the near future.

Thus, development of a technique for solving mainly the cost-related problem in the conventional method for reforming the heavy raw material and maximizing utilization of the heavy raw material is urgently necessary. In addition, from a viewpoint of recent environmental protection, there is no doubt that needs for dearomatization and de-hetero (desulfurization, denitrogenation, demetallization, etc.) will grow for lightened raw materials such as light oil and kerosine. Thus, development of a further high level of desulfurization technique such as ultra-deep desulfurization is desired.

In addition, hydrocarbon based wastes such as waste plastics have been hitherto disposed of by dumping, but are currently incinerated in general due to problems such as lacking in dumping sites and destruction of environment. In addition, wastes such as organic sludge containing a large amount of water, of the hydrocarbon based wastes described above, have a reduced heat generation rate and is hard to be directly incinerated with the conventional incineration technique, and are therefore used for an auxiliary fuel in, for example, a cement kiln, etc. or mixed with wastes having an increased heat generation rate, such as waste plastics, and incinerated.

On the other hand, due to increasing demands for environmental protection and resource saving in recent years, resource-conversion into materials useable for other applications are required even for these types of hydrocarbon based wastes.

Thus, various kinds of gasification techniques such as entrained flow gasification having a somewhat increased pressure, proven for hydrocarbon resources such as coal and heavy oil, are partly applied toward commercialization.

In the above conventional entrained flow gasification process, a thermal cracking reaction and a gasification reaction are made to occur under a high-temperature atmosphere by supplying oxygen to a hydrocarbon based raw material such as coal or heavy oil and partly combusting coal at a high temperature of 1000 to 1800°C, whereby gas having as main components hydrogen ($H_2$) and carbon monoxide (CO) gas is produced.

However, the above conventional gasification process has a disadvantage that a very high temperature is required for improving gas conversion efficiency, a sensible heat loss and an oven heat loss thus increase, and therefore a gasification performance is compromised.

In addition, this gasification process in which the thermal cracking reaction and the gasification reaction are carried out under a high-temperature atmosphere can be applied for high-calorie raw materials such as waste plastics described above, but is hard to achieve efficiently recycling of low-calorie hydrocarbon based wastes such as organic sludge.

From the above, establishment of a gasification process for efficiently gasifying various kinds of hydrocarbon based raw materials such as the above hydrocarbon resources and hydrocarbon based wastes to collect useful materials is strongly desired.

Disclosure of the Invention

<Object of the Invention>

In view of the above situations, the present invention is intended to solve the problems described below to contribute to an increase in use.

A first object of the present invention is to provide a method and apparatus for efficiently carrying out thermal cracking without using a catalyst and without supplying hydrogen from outside to increase yields of an oil component and thermal cracking gas.

Another object of the present invention is to provide a method and apparatus in which residues occurring with thermal cracking are gasified into a combustible gas, thereby making it possible to make use of a raw material.

Still another object of the present invention is to provide a method for separating metal impurities contained in a raw material as a solid and provide a new method and apparatus capable of increasing their adaptability for use as a resource.

Furthermore, in the high-temperature and high-pressure water atmosphere reaction processing apparatus of Japanese Patent Laid-Open No. 2001-232382, if a pressure fluid for backup is discharged directly from apparatus, a power to be consumed for application of pressure and heat absorbed by the fluid from an inner shell are wasted, and this is a significant negative factor from a viewpoint of industrialization. In addition, in reaction processing apparatuses of Japanese Patent Laid-Open No. 7-313987, Japanese Patent Laid-Open No. 2000-239672 and Japanese Patent Laid-Open No. 2001-232381, corrosion of an outer shell due to urgent stop of apparatus can not be prevented, and in the case of upsized apparatus, the heat generation rate in a reaction vessel increases, and it is thus important to introduce a method for forcefully remove the heat and to collect the heat as effective energy in terms of safety of a material and effective utilization of energy. However, introduction of all the functions into the inner shell makes difficult the design of the inner shell and complicates a structure to cause an increase in production cost.

The present invention has been made in view of the above situations, and has as its problem the provision of a high-temperature and high-pressure water atmosphere reaction processing apparatus capable of achieving a reduction in energy consumption.

Furthermore, the present invention has been made in view of the above situations, and has as its object the provision of a method and apparatus for reforming a hydrocarbon based heavy raw material capable of lightening a heavy raw material at a low cost and capable of performing high efficiency desulfurization at a low cost.

Furthermore, the present invention has been made in view of such situations, and has as its object the provision of a method for gasification of hydrocarbon based raw materials capable of efficiently gasifying various hydrocarbon based raw materials to collect useful materials under conditions of lower temperature compared to the conventional method.

<Configuration of the Invention>

The present invention is directed to a thermal cracking/gasification reaction apparatus characterized by comprising a reaction vessel allowing a thermal cracking/gasification reaction to proceed and having portions for combustion, gasification and thermal cracking, with the reaction vessel provided therein with multiple raw material and fluid supplying nozzle means.

Furthermore, the present invention is the thermal cracking/gasification reaction apparatus in the configuration described above, wherein the multiple raw material and fluid supplying nozzle means has at least two of an upward first supply nozzle for supplying a raw material having a low heat generation rate or a raw material adjusted to have a low heat generation rate, water and an oxidant from the lower part of the reaction vessel, a downward second supply nozzle for producing oil by thermal cracking from the middle position in the reaction vessel and forming residues to be flowed downward, and an upward third supply nozzle for supplying a raw material to be cracked from the upper position in the reaction vessel.

Furthermore, the present invention provides the thermal cracking/gasification reaction vessel according to claim 2, characterized by comprising means for multiple contact between a raw material to be cracked from the upper position in the reaction vessel and high-temperature gaseous product ascending from the lower part, and a downward water spray nozzle capable of supplying water from the upper part of the means for multiple contact and applying any temperature gradient to the means for multiple contact.

Furthermore, the reaction vessel may have a multiple-tube structure.

Furthermore, the present invention is the thermal cracking/gasification reaction apparatus comprising, between a pressure vessel for maintaining a high pressure and a reaction portion allowing thermal cracking/gasification to be carried out, a thermal cracking portion being capable of individually preheating thermal cracking/gasification raw materials, having partial combustion portion causing partial combustion in a gasification portion in the reaction portion, and supplying the raw material into a high-temperature gas material after partial combustion to cause the raw material to be cracked to produce a cracked oil and a cracked gas.

Furthermore, the present invention is a thermal cracking and gasification reaction apparatus comprising:

a thermal cracking/gasification reaction apparatus comprising a reaction vessel allowing a thermal cracking/gasification reaction to proceed and having portions for combustion, gasification and thermal cracking, with the reaction vessel provided therein with multiple raw material and fluid supplying nozzle means;
a first separator separating solid components from a product after thermal cracking and gasification;
a heat exchanger collecting heat from a produced fluid after separation;
a second separator removing heavy oil and water by cooling/decompression of the produced fluid after collection of heat; and
a multiple distillation column separating/collecting light oil and light gas from the produced fluid after removal of heavy oil and water.

Furthermore, the present invention is the thermal cracking/gasification reaction apparatus according to claim 5, wherein the reaction vessel is separated into the partial combustion portion and the thermal cracking portion, and the partial combustion portion and the thermal cracking portion communicate with each other via a neck portion, so that a high-pressure gaseous fluid produced in the partial combustion portion passes through a flow path of the neck portion and flows downward as a rectified gaseous fluid.

Furthermore, the present invention is a thermal cracking and gasification method characterized in that a hydrocarbon raw material supplied from the lower part is oxidized with an oxidant in an oxidization and combustion portion to produce mixed gas containing carbon dioxide and the excessive oxidant and generate reaction heat,

the hydrocarbon raw material supplied from the upper part is cracked in the lower part in the thermal cracking portion to produce residues of oil, cracked gas and a solid, and

the residues flowing downward from the thermal cracking portion are constantly heated by the heat of reaction in the gasification reaction portion, and the residues are made to react with the carbon dioxide, excessive oxidant and high-temperature and high pressure water produced in the oxidization reaction portion to produce mixed gas containing carbon monoxide and hydrogen, whereby the entire raw material including low quality and high quality is processed.

A high-temperature and high-pressure water atmosphere reaction processing apparatus according to the present invention is characterized in that the high-temperature and high-pressure water atmosphere reaction processing apparatus has a double-vessel structure with a reaction vessel placed inside a pressure vessel,

the reaction vessel is provided with raw material supplying means for supplying a raw material containing an organic substance into the reaction vessel, oxidant supplying means for supplying an oxidant into the reaction vessel, and water supplying means for supplying water into the reaction vessel,

heat exchanging means, into which a high-temperature and high-pressure product produced through a reaction between the raw material and the oxidant proceeding under an atmosphere of water in the reaction vessel is introduced, is provided between the pressure vessel and the reaction vessel,

the pressure vessel is provided with a water inlet communicating with a water supply line for supplying water to between the pressure vessel and the reaction vessel, and a passage port for introducing a discharge line for the product, communicating with the heat exchanging means, and

the water supplying means is provided with a flow path introduced between the pressure vessel and the reaction vessel via the water inlet and supplying the water heated by the heat exchanging means into the reaction vessel.

Furthermore, the raw material supplying means, the oxidant supplying means and the water supplying means may be formed as one united body, or may be separately placed at different positions, or two or more of them may have a common flow path.

Furthermore, the high-temperature and high-pressure water atmosphere reaction processing apparatus is characterized in that the high-temperature and high-pressure water atmosphere reaction processing apparatus has a double-vessel structure with a reaction vessel placed inside a pressure vessel,

the reaction vessel is provided with raw material supplying means for supplying a raw material containing an organic substance into the reaction vessel, oxidant supplying means for supplying an oxidant into the reaction vessel, and water supplying means for supplying water into the reaction vessel,

heat exchanging means having a heat-transfer tube, into which a high-temperature and high-pressure product produced through a reaction between the raw material and the oxidant proceeding under an atmosphere of water in the reaction vessel is introduced, is provided between the pressure vessel and the reaction vessel,

the pressure vessel is provided with a water inlet communicating with a water supply line for supplying water to between the pressure vessel and the reaction vessel, and a passage port for introducing a discharge line for the product, communicating with the heat-transfer tube,

the heat exchanging means is provided with a heat exchanging vessel surrounding a part of the heat-transfer tube into which the product is introduced, and

the heat exchanging vessel is coupled to a second water supply line for supplying water into the heat exchanging vessel, and an introduction flow path for introducing water heated by the heat-transfer tube in the heat exchanging vessel into the water supplying means.

Furthermore, the high-temperature and high-pressure water atmosphere reaction processing apparatus is characterized by comprising backflow preventing means accepting only a flow of the water into the water supplying means.

Furthermore, the high-temperature and high-pressure water atmosphere reaction processing apparatus of the present invention is characterized in that the double-vessel structure is such that an outer cylinder portion constituting an outer periphery of the pressure vessel and an inner cylinder portion constituting an outer periphery of the reaction vessel are situated in a double cylinder form, a cylindrical partition plate so situated as to form a multiple-cylinder with the outer cylinder and the inner cylinder is provided outside the heat exchanging means between the outer cylinder and the inner cylinder, and the partition plate is provided with an opening at one end in the axial direction.

Furthermore, the high-temperature and high-pressure water atmosphere reaction processing apparatus according to the present invention is characterized by comprising a plurality of such partition plates, wherein the partition plates are situated such that partition plates each having an opening at one end in the axial direction and partition plates each having an opening at the other end in the axial direction are alternatingly placed in the radial direction.

Furthermore, the high-temperature and high-pressure water atmosphere reaction processing apparatus is characterized by comprising pressure adjusting means for adjusting a pressure of the water between the pressure vessel and the reaction vessel.

In the present invention, a raw material, an oxidant and water are supplied into the reaction vessel from raw material supplying means, oxidant supplying means and water supplying means, respectively, whereby the raw material and the oxidant undergo a chemical reaction such as a gasification reaction involving heat generation under an atmosphere of water in the reaction vessel. In this case, water in the reaction vessel has an elevated temperature and pressure due to the chemical reaction.

That is, water is in a state of subcritical or supercritical water with the temperature of 300 to 1200°C and the pressure of 7 to 35 MPa (preferably 22.4 to 35 MPa). Under this subcritical or supercritical water, the raw material reacts with the oxidant, and reacts with water by appropriately changing the ratio of the raw material to the oxidant and water, thus making it possible to crack the raw material into harmless gas such as $CO_2$, or to obtain a high-temperature and high pressure product having hydrogen, methane, carbon dioxide and the like as maim components.

This product is discharged from the heat exchanging means through a discharge line to the outside of the pressure vessel, subjected to processing such as cooling, and then collected.

On the other hand, water is introduced from the water supply line through the water inlet to between the pressure vessel and the reaction vessel, and water receiving heat in the heat exchanging means to increase its temperature is ejected into the reaction vessel through the flow path of the water supplying means. The heat exchanging means transfer heat from the high-temperature product passing therethrough to water to increase the temperature of water and decrease the temperature of the product. After undergoing a decrease in temperature, the product is sent through the discharge line to the outside of the pressure vessel.

In addition, by keeping the pressure of water between the pressure vessel and the reaction vessel at a level same as the pressure inside the reaction vessel, the pressures inside and outside the reaction vessel can be almost equalized. Furthermore, water supplied to between the pressure vessel and the reaction vessel is heated to a state of subcritical water or supercritical water by the heat exchanging means, and functions as a balance fluid having compressibility.

Thus, a reduction in cost can be achieved reducing the thickness of the wall of the reaction vessel.

Furthermore, water supplied to between the pressure vessel and the reaction vessel is supplied into the reaction vessel, and never discharged directly to the outside, thus making it possible to achieve a reduction in energy consumption.

In addition, the temperature of water can be increased utilizing heat of the product passing through the heat exchanging means, and the temperature of the product can be decreased utilizing water, thus making it possible to achieve a reduction in energy required for increasing the temperature of water and decreasing the temperature of the product.

Furthermore, since the surface of the wall of the reaction vessel is not required to function as a heat-transfer surface, a thermal insulation material having heat resistance and the like, such as an oxide such as alumina, a nitride such as silicon nitride or a carbide such as silicon carbide, can be provided on the surface of the inner wall of the reaction vessel. In this case, the pressures inside and outside the reaction vessel can be almost equalized, and the surface of the wall of the reaction vessel hardly undergoes elastic deformation even if the pressure inside the reaction vessel varies, thus making it possible to prevent the thermal insulation material from being cracked even if the thermal insulation material made of fragile material compared to the reaction vessel is used. Thus, durability of the thermal insulation material can be improved.

In the present invention, water supplied from the second water supply line to the heat exchanging vessel is heated by the heat-transfer tube in the heat exchanging vessel, and then ejected into the reaction vessel from the water supplying means.

Thus, the temperature of water to be supplied into the reaction vessel can be efficiently increased.

In addition, water supplied to between the pressure vessel and the reaction vessel is heated to a state of subcritical water or supercritical water by the heat-transfer tube not covered with the heat exchanging vessel, and functions as a balance fluid having compressibility.

Furthermore, in the present invention, since backflow preventing means accepting only a flow of water into the water supplying means is provided, there is no possibility that a corrosive fluid produced in the reaction vessel flows backward through the flow path of the water supplying means, when apparatus is urgently stopped, for example. Thus, for example, it is possible to prevent a situation in which a corrosive fluid flows out to between the pressure vessel and the reaction vessel to corrode the inner surface of the pressure vessel.

Furthermore, in the present invention, a cylindrical partition plate is so situated as to form a multiple-cylinder with the outer cylinder portion and the inner cylinder portion outside the heat exchanging means between the outer cylinder portion and the inner cylinder portion, and therefore after water flowing in through the water inlet is flowed through the outer cylinder portion and the partition plate to one end in the axial direction, the temperature of the water by the heat exchanging means can be increased. Thus, an area along the inner surface of the pressure vessel is constituted by a type of insulation layer, so that the thickness of the thermal insulation material placed on the outer cylinder portion can be reduced or the thermal insulation material is no longer needed.

In addition, since radiant heat generated from the heat exchanging means can be blocked by the partition plate, an increase in temperature of the outer cylindrical portion can be inhibited. If the partition plate is warmed with radiant heat, the heat is easily transferred to water, efficiency of increase in temperature of water is further improved.

Furthermore, in the present invention, partition plates each having an opening at one end in the axial direction and partition plates each having an opening at the other end in the axial direction are situated alternatingly in the radial direction, and therefore after water flowing in through the water inlet is moved along the inner surface of the outer cylinder portion to one end in the axial direction, the water can be moved to the other end in the axial direction between next plates. That is, any number of layers through witch water moves can be formed along the outer cylinder portion, thus making it possible to improve the thermal insulation capability of this area.

Furthermore, in the present invention, since pressure adjusting means for adjusting a pressure of water between the pressure vessel and the reaction vessel is provided, the pressure of water can be adjusted according to a set pressure of the pressure adjusting means. In addition, the pressure inside the pressure vessel and the pressure of water between the pressure vessel and the reaction vessel is measured, and the pressure adjusting means is feedback-controlled so that the pressure of water between the pressure vessel and the reaction vessel approximates the pressure inside the reaction vessel, whereby the pressures inside and outside the reaction vessel can be almost equalized constantly.

Furthermore, for solving the problems of the present invention, a method for reforming a hydrocarbon based heavy material of the present invention is characterized in that a mixture of a hydrocarbon based heavy raw material and a reforming medium is supplied into a reactor under a high-temperature and high-pressure reforming medium atmosphere and part of the mixture is supplied into the reactor as a combustion raw material and combusted, whereby a partial combustion area of higher temperature is formed in the reactor and the inside of the reactor is kept under a high-temperature and high-pressure reforming medium atmosphere, and the heavy raw material is reformed by hydro-cracking with reactive hydrogen produced in the partial combustion area and the heavy raw material is reformed by thermal cracking under a reforming medium atmosphere.

Furthermore, a method for reforming a hydrocarbon based heavy raw material of the present invention is characterized in that a mixture of a hydrocarbon based heavy raw material and a reforming medium is supplied into a reactor under a high-temperature and high-pressure reforming medium atmosphere and part of the mixture is supplied into the reactor as a combustion raw material and combusted, whereby a partial combustion area of higher temperature is formed in the reactor and the inside of the reactor is kept under a high-temperature and high-pressure reforming medium atmosphere, and the heavy raw material is reformed by hydro-cracking with reactive hydrogen produced in the partial combustion area and the heavy raw material is reformed by thermal cracking under a reforming medium atmosphere, and then the reformed raw material is cracked by distillation processing, and residues produced as a result of the cracking are supplied into the reactor as part of the combustion raw material.

Furthermore, the method for reforming a hydrocarbon based heavy raw material is characterized in that the heavy raw material is reformed by hydro-cracking with reactive hydrogen produced in the partial combustion area and the heavy raw material is reformed by thermal cracking under a reforming medium atmosphere, and then solid components are separated from gas components in which the reformed raw material and the reforming medium coexist.

Furthermore, the method for reforming a hydrocarbon based heavy raw material is characterized in that water is used as the reforming medium, and the pressure inside the reactor is kept at 7 to 35 MPa (preferably 22 to 35 MPa) and the temperature of the partial combustion area is kept at 600 to 1000°C by combustion of the combustion raw material, and areas other than the partial combustion area in the reactor are adjusted to have a temperature of 380 to 900°C.

Furthermore, an apparatus for reforming a hydrocarbon based heavy raw material of the present invention is characterized by comprising a mixer for mixing a hydrocarbon based heavy raw material and a reforming medium, and a reactor in which the mixture mixed by the mixer is accepted under a high-temperature and high-pressure reforming medium atmosphere and part of the mixture is accepted as a combustion raw material and combusted, whereby the inside is kept under a high-temperature and high-pressure reforming medium atmosphere and a partial combustion area of higher temperature is formed there, and the heavy raw material is reformed by hydro-cracking with reactive hydrogen produced in the partial combustion area and the heavy raw material is reformed by thermal cracking under a reforming medium atmosphere.

Furthermore, the apparatus for reforming a hydrocarbon based heavy raw material of the present invention is characterized in that the apparatus comprises a distillation column cracking the raw material reformed in the reactor by distillation processing, and residues produced as a result of cracking in the distillation column are supplied into the reactor as part of the combustion raw material.

Furthermore, in the present invention, the mixture of the heavy raw material and the reforming medium is supplied into the high-temperature and high-pressure reactor, whereby the heavy raw material and the reforming medium are heated to be expanded.

On the other hand, part of the mixture is supplied as a combustion raw material and combusted, whereby the inside of the reactor can be kept under high-temperature and high-pressure conditions, and a partial combustion area of higher temperature can be formed in part of the reactor.

In the partial combustion area, the heavy raw material is partially combusted to produce reactive hydrogen. The active hydrogen contacts the heavy raw material, whereby thiophene based sulfurs being aromatic compounds of sulfur incapable of being cracked with normal hydrogen contained in the heavy raw material, for example dibenzothiophene (hereinafter referred to as "DBT") and dimethyl dibenzothiophene (DMDBT) can be converted into hydrogen sulfide ($H_2S$). That is, reforming involving high-efficiency desulfurization can be performed at a low cost without supplying hydrogen from outside or using a catalyst or the like.

In addition, if water is used as a reforming medium, for example, the heavy raw material is lightened through the following reactions (1) and (2) at a high temperature and under a high pressure, and repolymerization of the product is inhibited due to a cage effect by water.

$$C_mH_n \rightarrow CH_4 + H_2 + C_{n'}H_{m'} + \cdots \tag{1}$$

$$C_mH_n + xH_2O \rightarrow CH_4 + H_2 + C_{n'}H_{m'}OH + \cdots \tag{2}$$

Thus, the heavy raw material can be efficiently lightened at a low cost without supplying hydrogen from outside or using a catalyst or the like.

In the present invention, residues produced by cracking after reforming are used as a combustion raw material, and thus these residues can be used effectively. Furthermore, even if the residues contain a large amount of DBT described above, it can be cracked/desulfurized by partial combustion, thus eliminating the possibility that sulfur remains in further residues and solidifies.

Furthermore, in the present invention, since the post-reforming lightened raw material and the reforming medium are high-temperature and high-pressure gaseous materials, solid components contained in the gaseous components can easily be separated and taken out by a filter, cyclone or the like. The solid components include components such as metals and minerals contained in the heavy raw material, and thus resources such as the metals can be effectively collected.

In the present invention, since water is used as a reforming medium, and the temperature condition inside the reactor is such that the critical temperature of water is 374°C or greater, water has a form of a low-density fluid even though the pressure is 7 to 35 MPa (preferably 22 to 35 MPa). The temperature of the partial combustion area is 600 to 1000°C, and thus active hydrogen is produced in this partial combustion area. Thus, refractory sulfur compounds in the heavy raw material can be completely cracked.

In addition, the temperature of areas other than the partial combustion area is set to 380 to 900°C and therefore in these areas, the reactions of above formulae (1) and (2) can be made to proceed to lighten the heavy raw material. Of course, the heavy raw material can also be lightened in the partial combustion area.

Furthermore, a method for gasifying a hydrocarbon based raw material according to the present invention is characterized in that a hydrocarbon based raw material and an oxidant, the amount of which is equal to or greater than an amount required for fully oxidizing the hydrocarbon based raw material, are supplied from the lower part of a gasification reactor filled with high-temperature and high pressure water of 22 MPa or greater, and the hydrocarbon based raw material is supplied from the upper part of the gasification reactor, whereby an oxidization reaction portion, a gasification reaction portion, a thermal cracking portion and a shift reaction promotion portion are formed in this order from the lower toward the upper part of the gasification reactor, wherein the hydrocarbon based raw material supplied from the lower part is oxidized with the oxidant to produce mixed gas containing carbon dioxide and an excessive oxidant and generate reaction heat in the oxidization reaction portion, the hydrocarbon based raw material supplied from the upper part is cracked with heat generated in the lower part to produce cracked gas having hydrogen as a main component and residues having carbon as a main component in the thermal cracking portion, the residues flowing downward from the thermal cracking portion are made to react with the carbon dioxide produced in the oxidization reaction portion, the excessive oxidant and high-temperature and high-pressure water in under an atmosphere of temperature created by addition of the reaction heat to produce mixed gas containing carbon monoxide and hydrogen in the gasification reaction portion, the carbon monoxide is made to undergo an aqueous gas shift reaction with high-temperature and high-pressure water and thereby converted into hydrogen and carbon dioxide in the shift reaction promotion portion, and the resultant gas is taken out from the gasification reactor.

In this case, a hydrocarbon based raw material having a lower heat generation rate or adjusted to have a lower heat generation rate, compared to the hydrocarbon based raw material supplied from the upper part of the gasification reactor, can be supplied from the lower part of the gasification reactor.

In addition, in the present invention, the supply rate of the oxidant may be in the range of 0.5 to 1.5 to the amount of oxygen required for fully oxidizing the total amounts of residues flowing downward from the upper thermal cracking portion and the hydrocarbon based raw material supplied from the lower part.

Furthermore, in the present invention, the temperature of the oxidization reaction portion may be in the range of 400 to 1000°C, the temperature of the gasification reaction portion may be in the range of 600 to 1000°C, and the temperature of the thermal cracking portion may be in the range of 600 to 800°C.

Brief Description of the Drawings

Figure 1 shows a conceptual diagram of introduction of a supercritical technique into oil refining;

Figure 2 is a conceptual diagram showing a process and a system for introduction of the supercritical technique into oil refining, and shows a system for a thermal cracking/gasification technique;

Figures 3A, 3B and 3C each show a conceptual diagram of apparatus for producing gas and oil in which a low-calorie raw material can be used, wherein Figure 3A shows gas production, and Figures 3B and 3C each show gas and oil production;

Figures 4 and 5 each show a conceptual diagram of apparatus for producing gas and oil in which a low-calorie raw material can be used, and an example of configuration of multiple contact apparatus installed therein, each showing an apparatus for producing both gas and oil;

Figures 6A and 6B are illustrative diagrams showing a method and apparatus for producing gas and oil with a raw material having a relatively large heat amount, wherein Figure 6A shows gas production, and Figure 6B shows gas and oil production;

Figure 7 is an illustrative diagram of apparatus showing a structure for producing both gas and oil as shown in Figure 6B;

Figures 8A, 8B and 8C are illustrative diagrams each showing a detailed structure of a high-temperature area combustion portion shown in Figure 7;

Figure 9 is an illustrative diagram showing a configuration in one suitable Example of high-temperature and high-pressure water atmosphere reaction processing apparatus according to this invention;

Figure 10 is an illustrative diagram showing a configuration in another Example of high-temperature and high-pressure water atmosphere reaction processing apparatus according to this invention;

Figure 11 is a schematic block diagram showing a configuration in one suitable Example of apparatus for reforming a hydrocarbon based heavy raw material according to this invention;

Figure 12 is a schematic block diagram showing a configuration in another Example of apparatus for reforming a hydrocarbon based heavy raw material according to this invention;

Figure 13 is a schematic block diagram showing a reforming apparatus for experiments of Examples 4, 5 and 6 and Comparative Example 4;

Figure 14 is a graph showing results of Examples 4, 5 and 6;

Figure 15 is a schematic block diagram showing gasification reactor according to one Example of the present invention;

Figure 16 is a schematic block diagram showing a gasification system to be employed in one embodiment of the present invention;

Figure 17 is a schematic block diagram showing an alteration example of the gasification system of Figure 16; and

Figure 18 is a schematic block diagram showing another alteration example of the gasification system of Figure 16.

Best Mode for Carrying Out the Invention

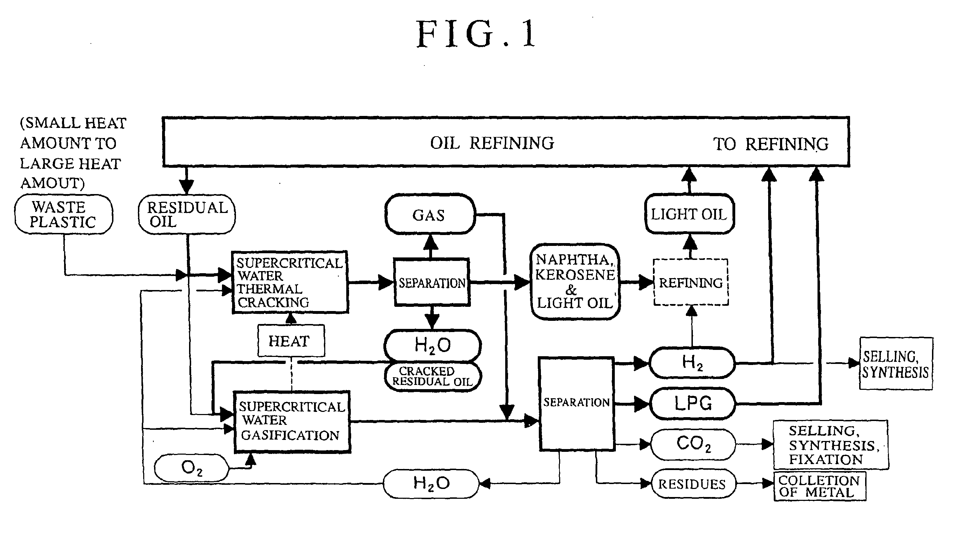

In Figure 1 showing a concept of introduction of a technique of high-temperature and high-pressure water including supercritical water into oil refining, by the method shown in this figure, residual oil from oil refining, and waste plastics are subjected to two-stage processing of thermal cracking and gasification using high-temperature and high-pressure water to collect high quality oil and liquefied petroleum gas (LPG), and thermal cracked residual oil produced in the process of the thermal cracking is gasified in high-temperature and high-pressure water and collected as hydrogen, combustible gas and carbon dioxide.

That is, in Figure 1, heavy oil obtained after vacuum distillation for collecting a useful light fraction from crude oil is called vacuum residues or residual oil, and light oil components (naphtha, and lamp and light oil components), light gas (LPG) and the like are first obtained by the thermal cracking. The remains after collection of the oil components and light gas are heavier oil or solid residues, but they are converted into hydrogen, methane (combustible gas) and $CO_2$ by gasification in high-temperature and high-pressure gasification. Due to the thermal cracking and gasification, the light oil and light gas contribute to an improvement in yield of an oil product, and hydrogen obtained by gasification can be used as hydrogen for hydro-refining/hydrocracking in oil refining.

In addition, $CO_2$ produced as a byproduct can be one commercial product of oil products, and metals (Ni, V) concentrated in gasification residues, which have been treated as impurities in heavy oil, can be treated as resources.

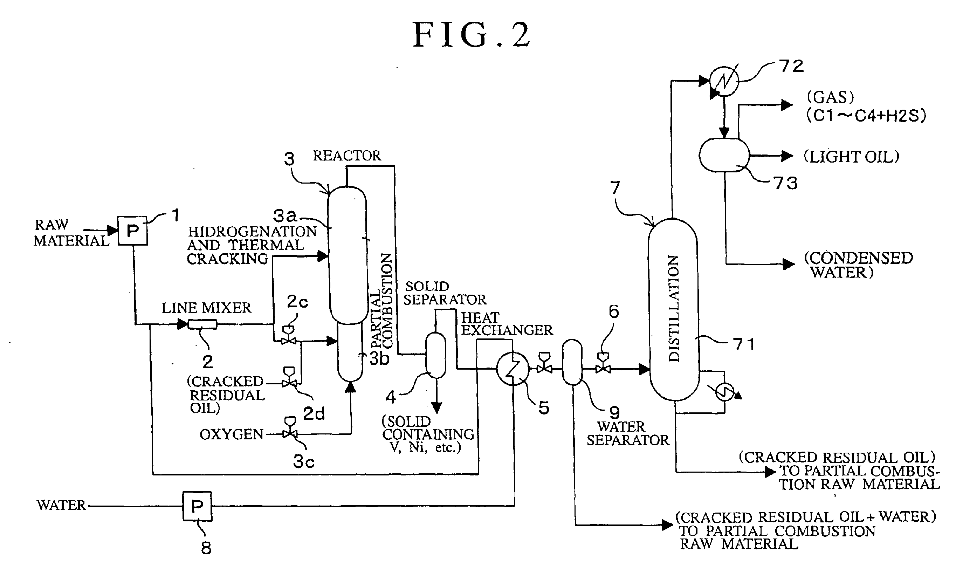

Figure 2 shows a concept of a system according to the present invention for obtaining a process for introduction of a technique of high-temperature and high-pressure water including supercritical water into oil refining. In this Figure, an apparatus comprises a high-pressure pump 1, a line mixer 2, a reactor 3, solid separator 4, a heat exchanger 5, a water separator 9, a vacuum valve 6 and a distillation apparatus 7 for oil product.

The reactor 3 is comprised of a partial combustion portion 3b in which part of a raw material is made to react with an oxidant, and a thermal cracking portion 3a in which upon reception of heat from the partial combustion portion, most part of the raw material undergoes thermal cracking.

As shown in this figure, the raw material is first supplied to the line mixer 2 by the high-pressure pump 1. At the same time, water is supplied to the line mixer by the high-pressure pump 8, and the water exchanges heat with itself in the latter half of the process, and is preheated to become high-temperature and high-pressure water. Part of a raw material-water mixed fluid leaving the line mixer 2 is supplied to the lower part of the reactor (partial combustion portion 3b) through a flow adjustment valve 2c, while most part thereof is supplied to the upper part of the reactor (thermal cracking portion 3a). The raw material supplied to the lower part of the reactor is partially combusted with an oxidant supplied also from the lower part, and continuously gasified and cracked with the heat in the upper part of the reactor. In the thermal cracking portion 3a, the raw material is supplied into a fluid heated to a high temperature in the lower part, mixed, and cooled to a temperature suitable for thermal cracking as a whole. The raw material supplied from the upper part undergoes thermal cracking at this temperature to produce light oil and light gas.

Since a product after thermal cracking has a slight amount of residues being a carbon based solid containing a produced light material and metals, the solid is separated by the solid separator 4, the remain is cooled with the heat exchanger 5, then the pressure and the temperature are adjusted, unreacted heavy components and most part of water are separated through the water separator 9, then the remain is sent to the distillation column 7, and light oil and gas are separated through cooling means 72 and a separation tank 73.

Cracked residual heavy oil passing through the distillation column 7 is a high-calorie raw material containing sulfur and metals, but is not suitable for production of a lightened oil by recycling, and is therefore recycled into the raw material in the partial combustion portion 3b of the reactor 3, and combusted for use as a heat source.

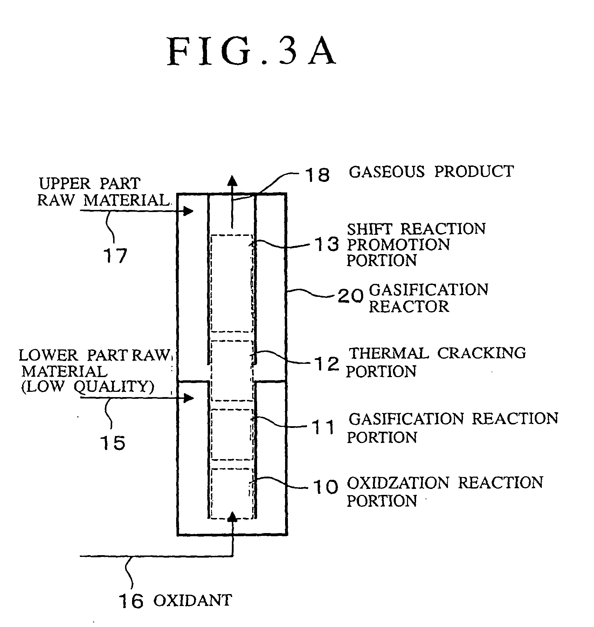

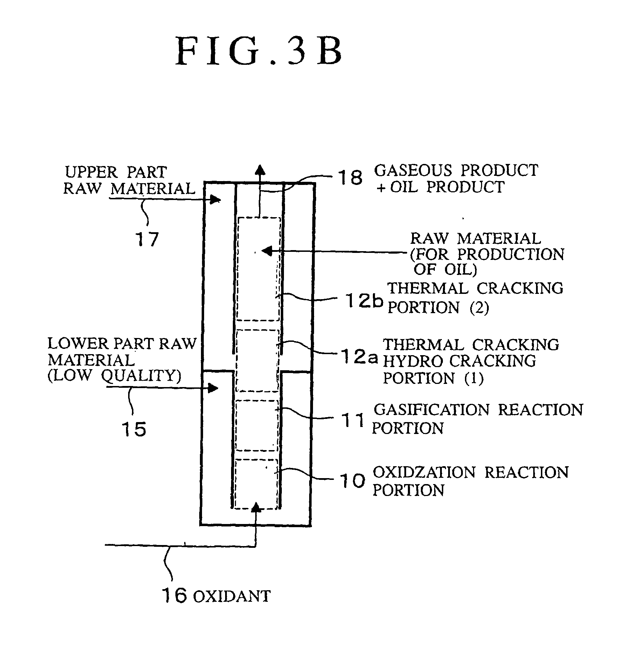

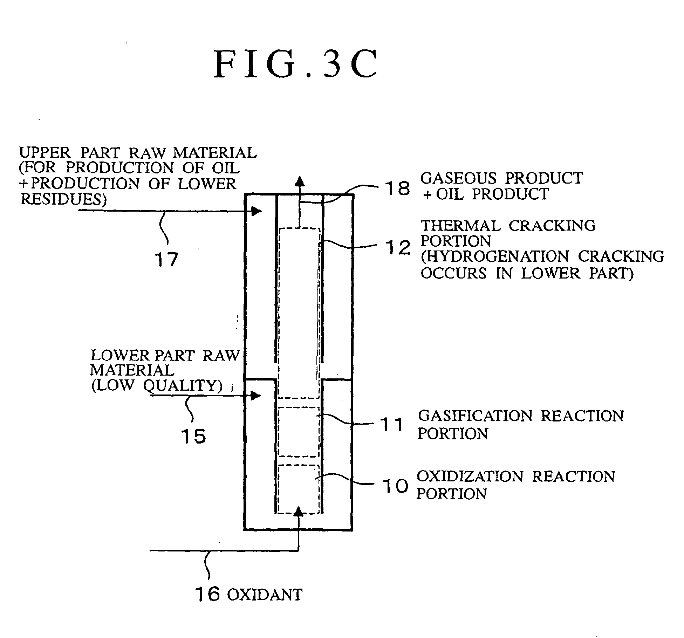

Figures 3A, 3B and 3C each show a concept of apparatus for producing gas and oil in which a low-calorie raw material can be used. In these figures, the reaction vessel itself of the production apparatus has a double-tube structure, but it is not limited to this structure as described later.

In Figure 3A, a lower part raw material supply line 15 for supplying a preprocessed raw material and an oxidant supply line 16 for supplying an oxidant such as air, pure oxygen or hydrogen peroxide are connected to the bottom of a gasification reactor 20. In addition, an upper part raw material supply line 17 for supplying a preprocessed raw material into the gasification reactor 20 is connected to the upper part of the gasification reactor 20, a discharge line 18 for discharging gas and high-temperature and high-pressure water produced by gasification of the raw material inside the gasification reactor 20 is connected to the ceiling part of the gasification reactor 20, and the discharge line 18 is guided to a gas-liquid separator (not shown) separating water from the gas discharged from the gasification reactor 20.

Next, in Figure 3B, in this apparatus, two types of raw materials having different thermal cracking properties are supplied from different positions to a high-temperature gaseous fluid passing through an oxidation reaction portion and a gasification reaction portion, whereby light oil and light gas are obtained. For a thermal cracking area (1), which contacts high-temperature gas from the gasification reaction portion, a raw material having an increased ratio of light gas production by thermal cracking and a high desulfurization action, being heavy and having a high concentration of sulfur (such as vacuum residues or natural heavy oil) is preferable. In this area, an effect of hydro-cracking by hydrogen produced in the gasification portion can be expected in addition to thermal cracking. On the other hand, in a thermal cracking area (2), a fluid with the temperature decreased in the thermal cracking area (1) flows in, hence more gentle thermal cracking can be expected, and a raw material that is more easily cracked (e.g. atmospheric residues, shale oil, etc.) can be supplied in addition to the heavy raw material described above.

Furthermore, a configuration of Figure 3C is almost same as that of Figure 3A, but in this configuration, one type of raw material for thermal cracking is supplied to a high-temperature gaseous fluid passing through the oxidization reaction portion and the gasification reaction portion, whereby light oil and light gas are obtained.

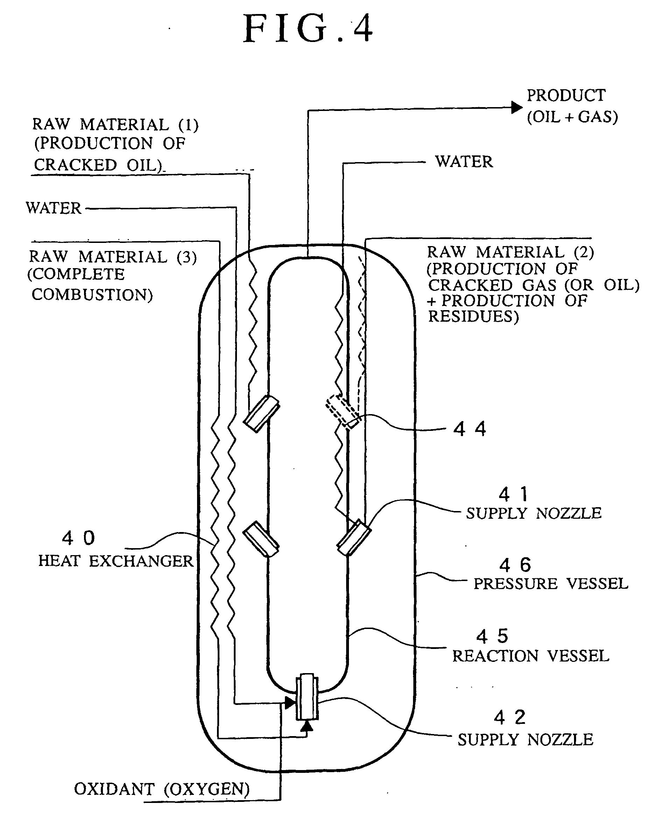

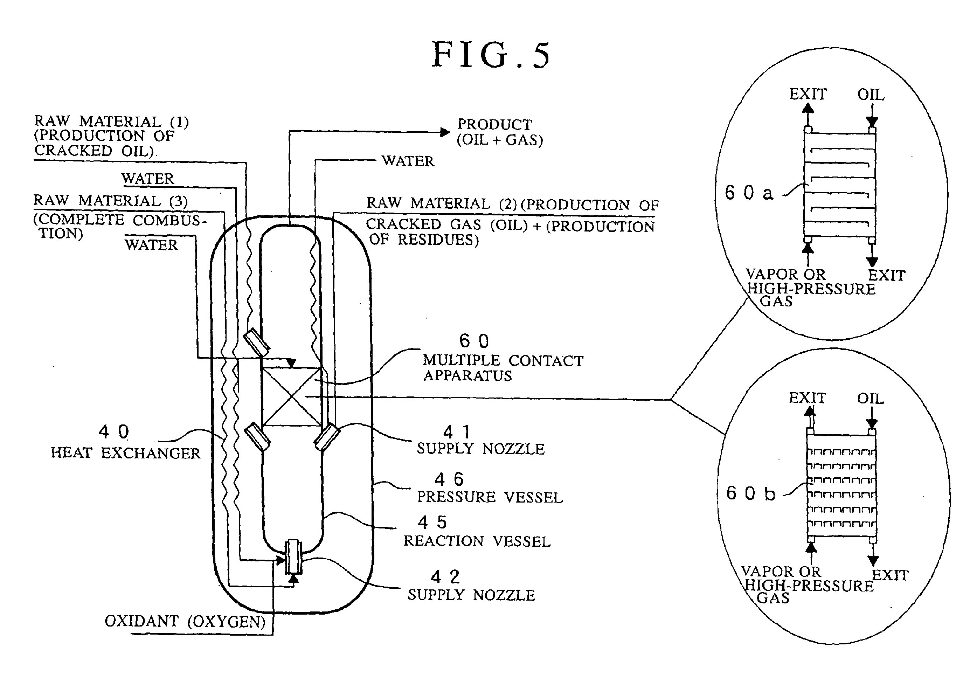

Figures 4 and 5 each show a concept of apparatus for producing gas and oil in which a low-calorie raw material can be used, each showing an apparatus for producing both gas and oil.

In Figure 4, the apparatus comprises a heat exchanger 40 for a supplied raw material and the like, supply nozzles 41, 42 and 44 for supplying a raw material, an oxidant and water, a reaction vessel 45, and a pressure vessel 46 housing these elements and intended for maintaining a high pressure inside the reaction vessel 45. Dissipated heat from the reaction vessel 45 is collected by the heat exchanger and recycled into the reaction vessel, and therefore the pressure vessel 46 should be only capable of maintaining a high pressure at a temperature of about 200 to 400°C, thus making it possible to form the apparatus with a relatively simple structure.

Figure 5 is an alteration example of the configuration of Figure 4. That is, a multiple contact apparatus 60 is installed in the configuration of Figure 4, and water is allowed to be ejected from the upper part of this apparatus as shown in the figure, whereby an area having a controlled temperature distribution in the multiple contact apparatus, and thermal cracking is performed in this apparatus. Contact with a gaseous product fluid from the lower part is improved, and a raw material supplied from the upper part of this multiple contact apparatus flows downward in this apparatus, whereby a gradually cracked light oil flows out upward in company with the gaseous product from the lower part, thus making it possible to obtain cracked light oil of high quality.

The multiple contact apparatus 60 can employ a zigzag step structure 60a, lattice structure 60b or the like to increase detention time inside the apparatus and improve a mixing performance as shown in the right side of Figure 5.

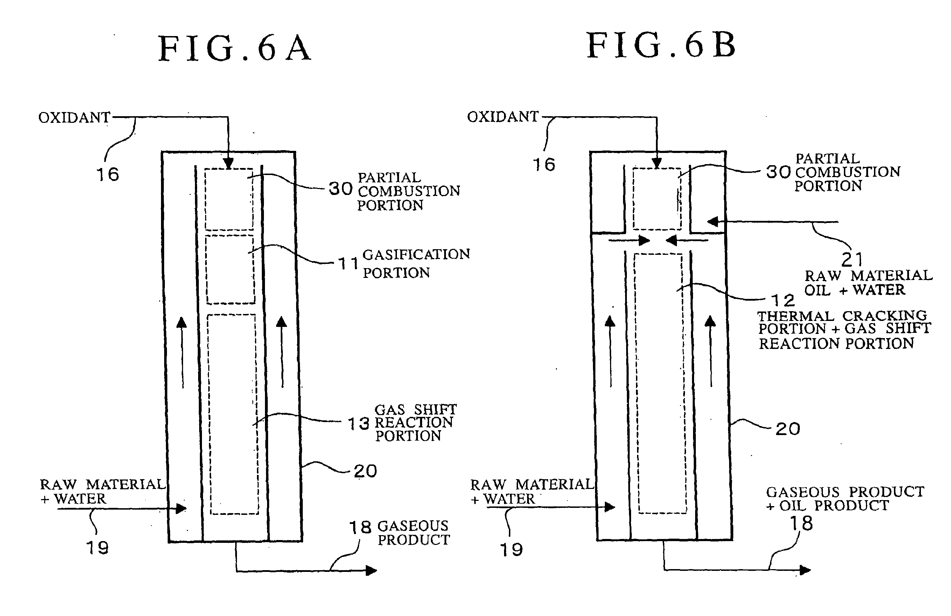

Figures 6A and 6B are schematic diagrams showing a method and apparatus for producing gas and oil with a raw material having a relatively large heat amount.

In Figure 6A, the gasification reactor 20 comprises an oxidant supply line 16, a raw material and water supply line 19 and a gaseous product discharge line 18, and comprises therein a partial combustion portion 30, a gasification 11 and a gas shift reaction portion 13 in the descending order. This configuration is an example of a structure where only gas is produced.

In Figure 6B, the gasification reactor 20 comprises the oxidant supply line 16, the raw material and water supply line 19, a raw material oil and water supply line 21 and the gaseous product discharge line 18, and comprises therein the partial combustion portion 30 and a thermal cracking portion 12 in the descending order. This configuration is an example of a structure where both the gas and oil are produced. In this configuration, a raw material is gasified and formed into a high-temperature gaseous fluid under the range of conditions of partial combustion to almost complete combustion of the raw material with the oxidant in the partial combustion portion 30. Part of the heat is used as preheat for the raw material and water supplied to this portion.

The high-temperature gaseous fluid is introduced into the thermal cracking portion 12, where a raw material for thermal cracking is supplied, and the high-temperature gaseous fluid and the raw material for thermal cracking are mixed together to rapidly cool the high-temperature gaseous fluid having a temperature of 1000 to 600°C to 650 to 400°C. On the other hand, in this process, the raw material for thermal cracking, preheated by heat exchange between the outside pressure vessel and the inside reaction vessel, is rapidly heated to 650 to 400°C. In this preheating portion, the raw material for thermal cracking starts being cracked to produce light oil, light gas, and heavy oil associated with the production of the light oil and light gas.

In addition, in the area of the thermal cracking portion, CO gas produced in the partial combustion portion 30 reacts with high-temperature and high-pressure water to cause a shift reaction to proceed, and conversion into hydrogen gas progresses ($CO + H_2O > CO_2 + H_2$). Due to progress of this reaction, produced hydrogen gas partly contributes to an improvement in cracking ratio as hydro-cracking.

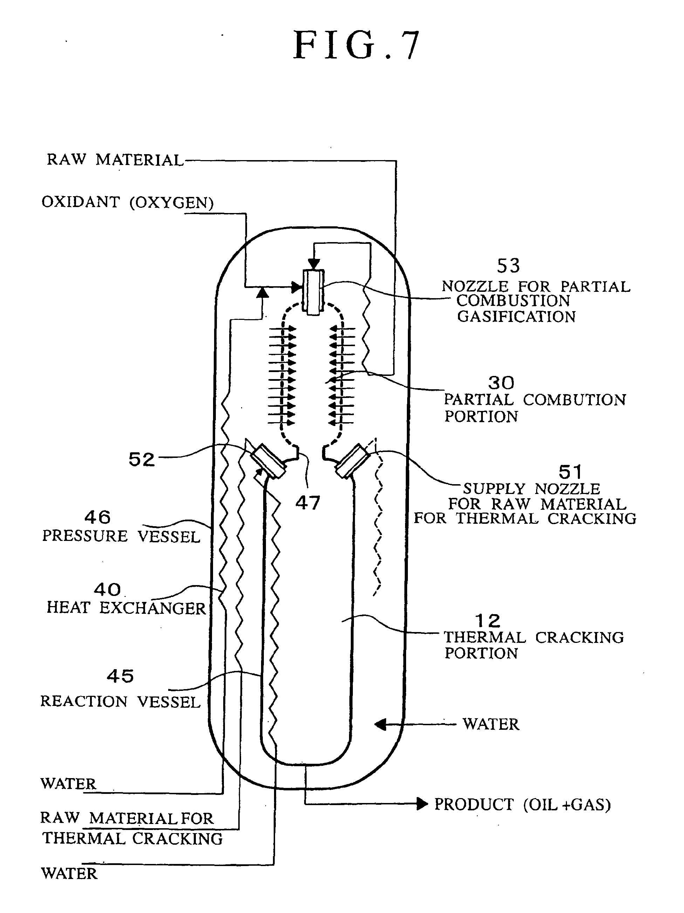

An example of an apparatus configuration for achieving a concept of Figures 6A and 6B showing the production of gas and oil ith a raw material having a relatively large heat amount is shown in Figure 7. The apparatus can be constituted by a simple structure comprised of a heat exchanger for a supplied raw material and the like, a supply nozzle, a reaction vessel 45, and a pressure vessel 46 housing these elements.

The reaction vessel 45 is separated into a vessel for partial combustion, i.e. a partial combustion portion 30 shown in the figure, and a thermal cracking portion 12 as a vessel for thermal cracking, and both portions are coupled to each other via a neck portion 47, whereby a high-temperature gaseous fluid produced in the partial combustion portion is formed into a rectified gaseous fluid through a necked flow path being the neck portion 47 and flows downward. In addition, the partial combustion portion vessel 30 has a structure allowing gas or water to flow in from outside, and inhibits overheat of the vessel caused by high-temperature partial combustion.

In the thermal cracking portion 12, a nozzle 51 for supplying a raw material for thermal cracking is installed at a position where the nozzle does not directly contact with the high-temperature rectified gaseous fluid. The high-temperature gaseous fluid is rapidly cooled to 650 to 400°C by spraying through the nozzle 51. The raw material for thermal cracking starts being cracked with the heat to become light oil, light gas and cracking residues in the mixed fluid. In this area, the cracking of the raw material can be expected to be promoted by hydrogen in high-temperature gas, and hydrogen produced by the shift reaction of CO gas in the thermal cracking portion 12.

The product discharged into the thermal cracking reaction vessel 45 consists of gas produced by partial combustion ($H_2$, CO, $CH_4$, $CO_2$), light oil by thermal cracking, light gas ($H_2$, $CH_4$, $C_2$, $C_3$, $C_4$) and cracked residual oil.

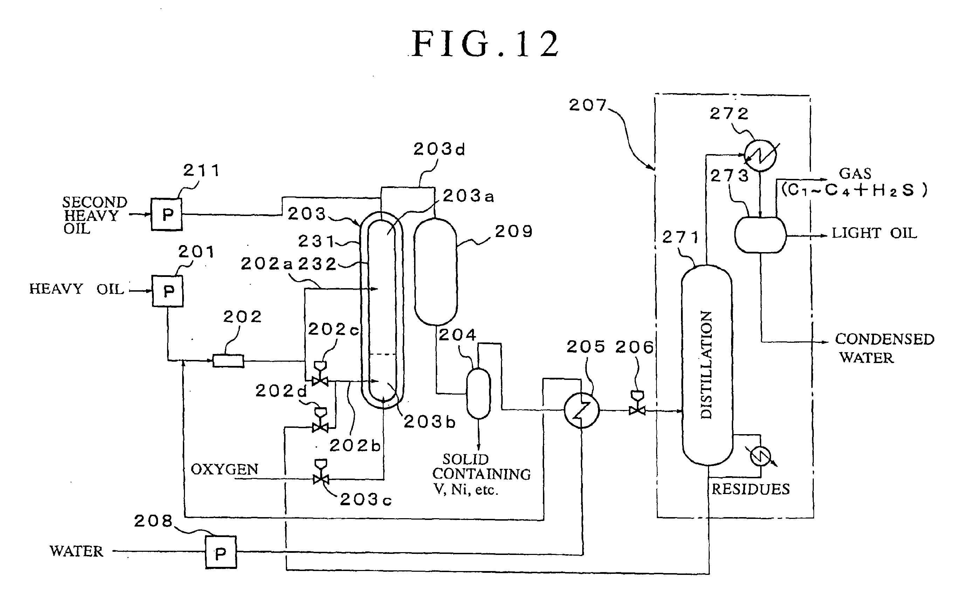

These products are separated into products (oil product and gaseous product) and cracked residual oil by posttreatment in a thermal cracking/gasification system similar to that shown in Figure 12 described later, and the cracked residual oil is recycled as a raw material for partial combustion. Furthermore, in Figure 7, symbol 52 denotes a water/raw material for thermal cracking supply nozzle placed at a position symmetric to the raw material for thermal cracking supply nozzle 51, and symbol 53 denotes a nozzle for partial combustion gasification.

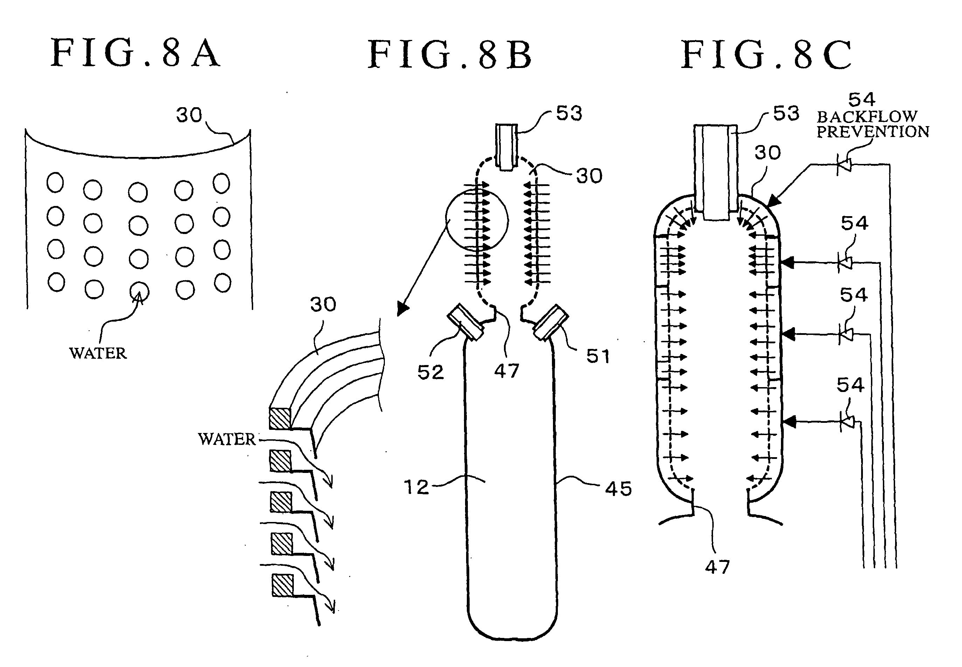

Figures 8A, 8B and 8C each show a structure of the partial combustion portion 30. In the figure, since the temperature of the partial combustion portion 30 increases to 600 to 1000°C, a layered structure is provided in the reaction vessel 45 area, and gas or water is supplied through a gap between the layers from outside to cool the partial combustion portion 30. A layered structure is provided in the example shown in the figure, but the structure is not limited thereto. In addition, in Figure 8C, the flow of gas or water supplied from outside is divided into a plurality of segments (e.g. divided into four segments as shown in the figure) to perform control, and the amount of gas or water supplied from the upper side at a higher temperature is greater. The temperature of the partial combustion portion 30 can be arbitrarily controlled due to such segmental supply. In the figure, symbol 53 denotes a back-flow valve.

<Specific Example of Experiment>

In the above configuration, specific experimental results are shown below.

(1) 480°C Thermal Cracking and Gasification

Heavy oil was cracked in supercritical water at 480°C, light oil and light gas were collected, and produced residues were gasified to obtain the following results.

(Thermal Cracking)

Temperature: 480°C
Pressure: 25 MPa
Raw Material: 1000 g (vacuum residues)
Products:

Light gas 150 g ($H_2$, $CH_4$, $CO_2$, $H_2S$, $C_2$, $C_3$, $C_4$)
Light oil 330 g (naphtha, kerosine, light oil equivalent fractions)
Heavy oil 340 g
Residues 180 g

(Gasification)

Of the products obtained by the thermal cracking, heavy oil (340 g), residues (180 g) and light oil equivalent fractions (130 g) of light oil were used as raw materials for gasification to obtain the following results.

Temperature: about 950°C
Pressure: 25 MPa
Raw material: 650 g
Oxygen: 470 g
Product: $H_2$: 75 g

$CH_4$: 134 g
CO: 418 g
$CO_2$: 1007 g
$H_2S$: 40 g
Reaction residues: very small amount

As a result of the thermal cracking and gasification, it was found that heavy oil was inverted into light oil and light gas.

(2) 550°C Thermal Cracking and Gasification

Heavy oil was cracked in supercritical water at 550°C, light oil and light gas were collected, and produced residues were gasified to obtain the following results.

(Thermal Cracking)

Temperature: 550°C
Pressure: 25 MPa
Raw Material: 1000 g (vacuum residues)
Products:

Light gas 180 g ($H_2$, $CH_4$, $CO_2$, $H_2S$, $C_2$, $C_3$, $C_4$)
Light oil 400 g (naphtha, kerosine, light oil equivalent fractions)
Heavy oil 240 g
Residues 180 g

(Gasification)

Of the products obtained by the thermal cracking, heavy oil (340 g), residues (180 g) and light oil equivalent fractions (130 g) of light oil were used as raw materials for gasification to obtain the following results.

Temperature: about 950°C
Pressure: 25 MPa
Raw material: 550 g
Oxygen: 440 g
Product: $H_2$: 63 g

$CH_4$ : 102 g
CO: 340 g
$CO_2$ : 887 g
$H_2S$: 35 g
Reaction residues: very small amount

Next, Examples relating to high-temperature and high-pressure water atmosphere reaction processing apparatus according to the present invention will be described with reference to the drawings.

(First Embodiment)

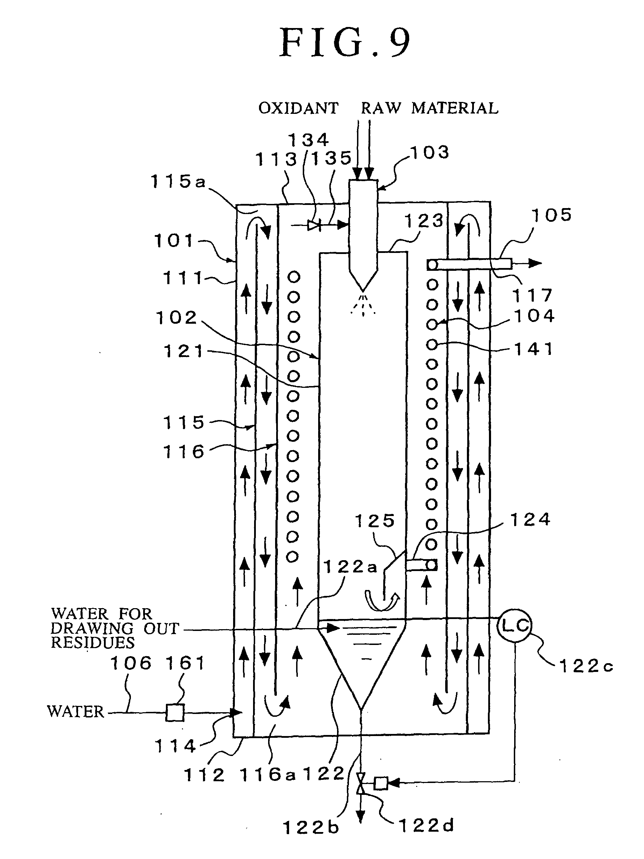

First, first Example of high-temperature and high-pressure water atmosphere reaction processing apparatus according to this invention will be described with reference to Figure 9.

The high-temperature and high-pressure water atmosphere reaction processing apparatus shown in this Example has a double-vessel structure comprised of a pressure vessel 101 and a reaction vessel 102 situated inside the pressure vessel 101.

The pressure vessel 101 is comprised of a cylindrical outer cylinder portion 111, a bottom plate portion 112 so situated as to close one end in the axial direction of the outer cylinder portion 111, and a top plate portion 113 so situated as to close the other end in the axial direction of the outer cylinder portion 111, and at least the top plate portion 113 is removable from the outer cylinder portion 111. The pressure vessel 101 is made of structural steel having a large thickness, and retains a high pressure produced inside the vessel under a sufficiently safe acceptable stress.

The reaction vessel 102 is comprised of a cylindrical inner cylinder portion 121, a bottom portion 122 so situated as to close one end in the axial direction of the inner cylinder portion 121, and a top plate portion 123 so situated as to close the other end in the axial direction of the inner cylinder portion 121, and at least the top plate portion 123 is removable from the inner cylinder portion 121. The reaction vessel 102 is made of metal material having heat resistance, corrosion resistance and the like because the inside atmospheric temperature increases to as high as 300 to 1200°C, and corrosive reactive gas such as halogen compounds is produced. In addition, the reaction vessel 102 has the internal pressure increased with a reaction, but pressures inside and outside the reaction vessel 102 are almost equalized by water also used as a balance fluid described later, and thus the reaction vessel 102 has a wall thickness sufficiently small compared to the pressure vessel 101.

The pressure vessel 101 and the reaction vessel 102 are situated so that the outer cylinder portion 111 and the inner cylinder portion 121 form a coaxial double cylinder, wherein one end and the other end in the axial direction face downward and upward.

In addition, the reaction vessel 102 has a leading end of a nozzle 103 protrusively provided therein. The nozzle 103 is so situated as to vertically extend through the centers of the top plate portions 113 and 123 of the pressure vessel 101 and the reaction vessel 102. The nozzle 103 also serves as a water supply nozzle (water supplying means) for ejecting (supplying) water into the reaction vessel 102. That is, water flows through a back-flow valve (backflow preventing means) 134 into a flow path of the nozzle 103, and is ejected into the reaction vessel 102. Furthermore, the back-flow valve 134 is provided in an introduction tube 135 for introducing water between the pressure vessel 101 and the reaction vessel 102 into the nozzle 103.

If the raw material is a liquid, the nozzle 103 atomizes the raw material and water and ejects the same into the reaction vessel 102 together with an oxidant. That is, the nozzle 103 serves as both of a raw material supply nozzle (raw material supplying means) for supplying a raw material into the reaction vessel 102 and an oxidant supply nozzle (oxidant supplying means) for supplying an oxidant into the reaction vessel 102.

The raw materials include coal, oil and natural tar as fossil fuels, waste plastics, swage sludge and biomasses as organic wastes. In addition, a fluid as a oxidant, for example oxygen, oxygen-enriched air, $H_2O_2$ or the like may be supplied into the reaction vessel 102 through the nozzle 103.

The raw material and the oxidant undergo a chemical reaction involving heat generation under a water atmosphere, whereby water in the reaction vessel 102 is brought into a high-temperature and high-pressure state.

That is, water in the reaction vessel 102 goes into a state of subcritical or supercritical water with the temperature of 300 to 1200°C and the pressure of 7 to 35 MPa (preferably 22.4 to 35 MPa) by the chemical reaction. The raw material and oxidant are continuously supplied under the subcritical or supercritical water to continue the reaction, whereby the high-temperature and high-pressure state can be maintained, and by the reaction of the raw material, the oxidant, water and the like, the raw material can be cracked into harmless gas such as $CO_2$, or high-temperature and high-pressure gaseous product (product) having hydrogen, methane, carbon dioxide and the like as main components can be obtained.

This gaseous product flows into a heat exchanger (heat exchanging means) 104 through a gaseous product outlet 124 provided in the lower part of the inner cylinder portion 121 in the reaction vessel 102.

In addition, water for drawing out residues is supplied to the bottom portion 122 through a supply tube 122a, and water for drawing out residues is drawn out from the bottom portion 122 through a discharge tube 122b. The water surface level of water for drawing out residues in the reaction vessel 102 is kept at a fixed level by detecting the water surface level by a level sensor 122c, and controlling a flow control valve (flow controlling means) 122d provided in the discharge tube 122b based on the detection data to control the amount of water for drawing out residues that is discharged from the flow control valve 122d.

The gaseous product outlet 124 is provided at a position above the surface of the water for drawing out residues. In addition, the inner cylinder portion 121 is provided with a cover 125 for preventing solids and the like other than gaseous product from entering the gaseous product outlet 124. The cover 125 covers the upper part and the side part of the gaseous product outlet 124 to guide only gaseous product from the lower part into the gaseous product outlet 124.

The heat exchanger 104 has a heat-transfer tube 141 wound in a helical fashion into a cylindrical shape, and is situated between the outer cylinder portion 111 and the inner cylinder portion 121 and coaxially with the outer cylinder portion 111 and inner cylinder portion 121. The heat exchanger 104 is situated at a position closer to the inner cylinder portion 121, one end of the heat-transfer tube 141 is connected to the gaseous product outlet 124, and the other end of.the heat-transfer tube 141 is connected to the gaseous product discharge line 105.

Furthermore, the heat exchanger 104 may be constituted by a multiple tube, a multiple cylinder or the like other than the helical body described above. That is, the heat exchanger 104 may have any shape as long as it is within a space between the outer cylinder portion 111 and the inner cylinder portion 121.

In addition, the heat exchanger 104 may be situated at any position between the outer cylinder portion 111 and the inner cylinder portion 121. That is, it is not necessarily required that the heat exchanger 104 should be situated coaxially with the outer cylinder portion 111 and the inner cylinder portion 121. However, the heat exchanger 104 is preferably coaxially situated with the outer cylinder portion 111 and the inner cylinder portion 121.

In addition, the pressure vessel 101 is provided with a water inlet 114 at the lower end of the outer cylinder portion 111, and also provided with a passage port 117 for introducing the gaseous product discharge line 105. The water inlet 114 is connected to a supply line 106 for water for pressure balance and to be supplied into the reaction vessel 102. The water supply line 106 is provided with a flow control valve ( flow controlling means) 161 for controlling the flow of water to be supplied to between the pressure vessel 101 and the reaction vessel 102.

Furthermore, two cylindrical partition plates 115 and 116 so situated as to form a multiple cylinder with the heat exchanger 104, the outer cylinder portion 111 and the inner cylinder portion 121 are provided at a predetermined interval in the radial direction outside the heat exchanger 104 between the outer cylinder portion 111 and the inner cylinder portion 121. The partition plate 115 situated on the outer side has a configuration such that the lower end (one end) is tightly fixed to the bottom plate portion 112 of the pressure vessel 101 by welding or the like, and an opening 115a is provided at the upper end (the other end). The opening 115a is formed by a gap between the upper end of the partition plate 115 and the top plate portion 113.

In addition, the partition plate 116 situated on the inner side has a configuration such that the upper end (the other end) is tightly fixed to the top plate portion 113 of the pressure vessel 101, and an opening 116a is provided at the lower end (one end). The opening 116a is formed by a gap between the lower end of the partition plate 116 and the bottom plate portion 112. That is, the partition plate 115 having the opening 115a at the upper end and the partition plate 116 having the opening 116a at the lower end are situated in an alternating manner.

Furthermore, for the partition plate, two partition plates are provided as the partition plates 115 and 116, but no partition plate may be provided. However, one or more partition plates are preferably provided. If one or more partition plates are provided, the opening of the innermost partition plate (closest to the heat exchanger 104) is preferably located at the lower end. That is, if an odd number of partition plates equal to or greater than 1 are provided, the water inlet 114 should be placed at the upper end of the outer cylinder portion 111, so that the opening of the innermost partition plate is situated at the lower end, and if an even number of partition plates equal to or greater than 2 are provided, the water inlet 114 should be placed at the lower end of the outer cylinder portion 111, so that the opening of the inner most partition plate is situated at the lower end, as shown in Figure 9.

In this way, the opening 116a of the innermost partition plate 116 is situated at the lower end, whereby water is supplied to below the heat exchanger 104, thus making it possible to utilize an upward flow by heating of the heat exchanger 104 to efficiently supply water to the upper back-flow valve 134.

The back-flow valve 134 accepts only movement of water in a direction in which water flows into the nozzle 103 from between the pressure vessel 101 and the reaction vessel 102, thus preventing water from flowing opposite to the direction. In addition, the pressure vessel 101 and the reaction vessel 102 communicate with each other only in one direction described above in the line of the back-flow valve 134 and the nozzle 103, and are completely blocked from each other in other areas.

In the high-temperature and high-pressure water atmosphere reaction processing apparatus configured as described above, the raw material, the oxidant and water are each supplied from the nozzle 103 into the reaction vessel 102, whereby the raw material and the oxidant undergo a chemical reaction involving heat generation under a water atmosphere. In this case, the inside of the reaction vessel 102 has an increased temperature and pressure due to the chemical reaction.

That is, water is in a state of subcritical or supercritical water under high-temperature and high pressure conditions of 300 to 1200°C and 7 to 35 MPa (preferably 22.4 to 35 MPa). A raw material containing an organic substance is oxidized with oxygen in a oxidant under the subcritical or supercritical water to generate heat, whereby high-temperature and high-pressure gas having hydrogen, methane and carbon dioxide as main components is produced from the raw material, water and the oxidant.

The gaseous product moves downward, and is then supplied to the heat exchanger 104 through the gaseous product outlet 124, discharged to the outside of the pressure vessel 101 through the gaseous product discharge line 105, cooled to a predetermined temperature, and then separated and collected as hydrogen, methane, carbon dioxide and the like.

On the other hand, water adjusted to have a predetermined pressure via the flow control valve 161 is supplied from the water supply line 106 through the water inlet 114 to between the pressure vessel 101 and the reaction vessel 102. Water flowing into the pressure vessel 101 passes between the partition plates 115 and 116 and the like, then flows upward along the heat exchanger 104. Water receives heat from high-temperature gaseous product passing though the heat exchanger 104 to increase its temperature, and is then supplied into the pressure vessel 102 through the back-flow valve 134 and the nozzle 103.

On the other hand, the gaseous product, which is deprived of heat by water between the pressure vessel 101 and the reaction vessel 102 to decrease its temperature, is discharged to the outside of the pressure vessel 101 through the gaseous product discharge line 105.

In addition, the pressure of water between the pressure vessel 101 and the reaction vessel 102 is a sum of pressure losses of the back-flow valve 134, the introduction tube 135, the nozzle 103 and the like and a pressure inside the reaction vessel 102. However, the pressure losses of the back-flow valve 134, the introduction tube 135, the nozzle 103 and the like are very small compared with the pressure inside the reaction vessel 102, and therefore the pressure of water between the pressure vessel 101 and the reaction vessel 102 is slightly greater than, but almost equal to the pressure inside the reaction vessel 102. Thus, even if the pressure inside the pressure vessel 102 increases to as high as 7 to 35 MPa as described above, a stress produced in the reaction vessel 102 due to the pressure can be reduced to almost zero. That is, water supplied to between the pressure vessel 101 and the reaction vessel 102 is heated to a state of subcritical or supercritical water by the heat exchanger 104, and functions as a balance fluid having compressibility.

Thus, a reduction in cost can be achieved by reduction of thickness of the wall of the reaction vessel 102.

Furthermore, water supplied to between the pressure vessel 101 and the reaction vessel 102 is supplied into the reaction vessel 102, and never discharged to the outside, thus making it possible to achieve a reduction in energy consumption.

In addition, in response to a variation in pressure inside the reaction vessel 102, the pressure outside the reaction vessel 102 can be changed to a pressure equivalent to the varied pressure, thus making it possible to reliably prevent the reaction vessel 102 from being excessively stressed. That is, durability of the reaction vessel 102 can be improved.

Furthermore, water ejected into the reaction vessel 102 can increase its temperature using heat of gaseous product, and the gaseous product can be cooled by water, thus making it possible to achieve a reduction in energy for increasing the temperature of water and energy required for cooling the gaseous product.

Provision of the heat exchanger 104 eliminates the necessity to make the wall surfaces of the inner cylinder portion 121, the top plate portion 123 and the like in the reaction vessel 102 function as heat-transfer surfaces, thus making it possible to provide a thermal insulation material having heat resistance, such as, for example, an oxide such as alumina, a nitride such as silicon nitride and a carbide such as silicon carbide along the inner wall surface of the reaction vessel. Therefore, durability of the reaction vessel 102 can be improved, and heat efficiency can be improved due to an improvement in heat retaining properties. In addition, the temperature inside the reaction vessel 102 drops as the position descends with the temperature at the uppermost position with combustion being the highest, but the drop rate can be alleviated with a temperature-retaining effect of the thermal insulation material. Therefore, the gasification reaction can be promoted, thus making it possible to achieve an improvement in yield of gaseous product.

In addition, control can be performed so that pressures inside and outside the reaction vessel 102 are at almost the same level, or rather the pressure outside the reaction vessel 102 is slightly greater, thus making it possible to reduce variations in deformation of the reaction vessel 102 to almost zero. Therefore, the thermal insulation material fragile compared to the reaction vessel 102 can be prevented from being cracked with a tensile stress. Thus, the durability of the thermal insulation material can be improved.

Furthermore, since it is not required to make the wall surface of the reaction vessel 102 function as a heat-transfer surface, the length in the axial direction of the reaction vessel 102 can be reduced compared to a conventional vessel requiring a heat-transfer surface. Thus, a reduction in production cost can be achieved, and entire apparatus can be downsized.

In addition, even if no thermal insulation material is provided on the inner wall surface of the reaction vessel 102, the reaction vessel 102 is surrounded by the heat exchanger 104, through which high-temperature gaseous product passes, thus making it possible to alleviate the rate at which the temperature inside the reaction vessel 102 drops as the position ascends. That is, the temperature inside the reaction vessel 102 can be kept at a high level at a lower position, and therefore the gasification reaction can be promoted, thus making it possible to improve the yield of gaseous product.

Furthermore, the thermal insulation material may be provided on the wall surface of the partition plates 115 and 116, rather than on the inner wall surface of the reaction vessel 102. The thermal insulation material in this case may be inferior in heat resistance to that provided on the inner wall surface of the reaction vessel 102 described above. The thermal insulation material is preferably provided on the inner wall surface of the innermost partition plate 116. In this case, the heat exchanger 104 can be surrounded by the thermal insulation material, thus making it possible to further improve the heat retaining effect of the reaction vessel 102. Thus, the yield of gaseous product can be improved.

In addition, since the back-flow valve 134 accepting only a flow of water into the nozzle 103 is provided, a corrosive fluid in the reaction vessel 102 can be prevented from flowing back into the pressure vessel 101 through the nozzle 103, even in a case where the apparatus is emergently stopped, for example. Thus, the inner surface of the pressure vessel 101 can reliably be prevented from being corroded by the corrosive fluid in the reaction vessel 102.

On the other hand, since the partition plates 115 and 116 are provided outside the heat exchanger 104 between the outer cylinder portion 111 and the inner cylinder portion 121, water flowing in through the water inlet 114 first moves upward through between the outer cylinder portion 111 and the partition plate 115, and then moves downward through between the partition plates 115 and 116. Thus, an area along the inner face of the pressure vessel 101 is constituted a type of thermal insulation layer, and therefore the thermal insulation material provided on the outer periphery of the outer cylinder portion 111 can be reduced, or the thermal insulation material is no longer required. Particularly, by increasing the number of partition plates 115 and 116, the thermal insulation effect can be improved.

Radiant heat emitted from the heat exchanger 104 can be blocked by the partition plates 115 and 116 and therefore, in this respect, an increase in temperature of the outer cylinder portion 111 can be inhibited. If the partition plate is warmed with radiant heat, the heat is transferred to water through the partition plate, thus making it possible to increase the temperature of water more efficiently.

Furthermore, components remaining as residues such as solid components, of the raw material undergoing a reaction under high-temperature and high-pressure water described above, drops in water for drawing out residues stored in the bottom portion 122, and is discharged to the outside of the reaction vessel 102 and the pressure vessel 101 through the discharge tube 122b and the flow control valve 122d together with the water for drawing out residues, and thereby collected. Furthermore, the residues collected here may be charged into the reaction vessel 102 again as a raw material, and water with residues separated therefrom may be supplied to the bottom portion 122 as water for drawing out residues.

Furthermore, a nozzle serving as a raw material supply nozzle, a water supply nozzle and an oxidant supply nozzle has been shown as the nozzle 103, but the raw material supply nozzle, the water supply nozzle and the oxidant supply nozzle may be separately provided.

(Second Embodiment)

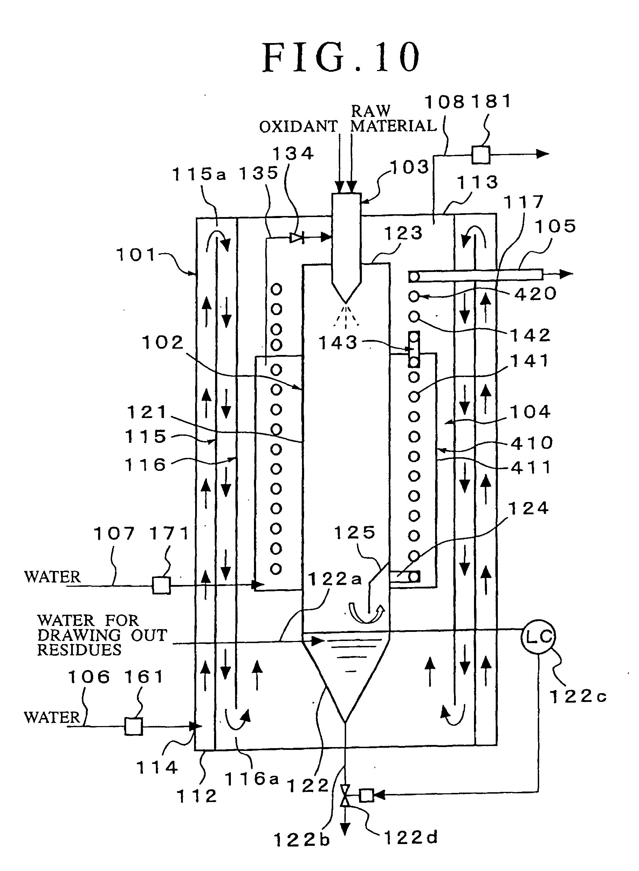

The second embodiment of this invention will now be described with reference to Figure 10. Here, elements identical to elements of the first embodiment shown in Figure 9 are given like symbols, and only briefly described.

A heat exchanger 104 shown in the second embodiment comprises a first heat exchanger 410 and a second heat exchanger 420.

The first heat exchanger 410 is connected to a gaseous product outlet 124, and comprises a heat-transfer tube 141 situated around an inner cylinder portion 121 and a heat exchanging vessel 411 keeping the heat-transfer tube 141 in a closed state in cooperation with the inner cylinder portion 121. The heat exchanging vessel 411 is composed of a thin metal having corrosion resistance, such as stainless steel, and surrounds the heat-transfer tube 141 in cooperation with the outer of the inner cylinder portion 121 to completely isolate the inside thereof from a space between the pressure vessel 101 and the reaction vessel 102.

However, the heat exchanging vessel 411 may have any form as long as it completely isolates a space around the heat-transfer tube 141 from a space between the pressure vessel 101 and the reaction vessel 102. Thus, for example, it may have a configuration such that the heat-transfer tube 141 is surrounded in the form of a double tube. That is, the heat exchanging vessel 411 may be formed by outer tubes surrounding the heat-transfer tube 141 at a predetermined interval.

The second heat exchanger 420 is located above the first heat exchanger 410 and has a heat-transfer tube 142 situated around the inner cylinder portion 121. The heat-transfer tube 142 has a configuration similar to that of the heat-transfer tube 141. An inlet of the heat-transfer tube 142 is coupled to an outlet of the heat-transfer tube 141 by a coupling piping 143. In addition, an outlet of the heat-transfer tube 142 is connected to a gaseous product discharge line 105. Furthermore, the heat-transfer tube 141 and the heat-transfer tube 142 may be formed as one tube.

In addition, a second water supply line 107 is connected to the lower part of the heat exchanging vessel 411 (end of the heat-transfer tube 141 on the inlet side), and an introduction tube (introduction flow path) 135 is connected to the upper part of the heat exchanging vessel 411 (end of the heat-transfer tube 141 on the outlet side). The second water supply line 107 is provided with a flow control valve (flow controlling means) 171 at a position outside the pressure vessel 101. In addition, a water discharge line 108 is connected to the inside of a partition plate 116 in a top plate portion 113, and the water discharge line 108 is provided with a pressure control valve (pressure controlling means) 181.

In the high-temperature and high-pressure water atmosphere reaction processing apparatus configured as described above, water supplied from the second water supply line 107 moves upward while receiving heat from the high-temperature heat-transfer tube 141 near the gaseous product outlet 102 to increase its temperature, and is supplied into the reaction vessel 102 through the introduction tube 135, a back-flow valve 134 and a nozzle 103. Thus, the temperature of water to be supplied into the reaction vessel 102 can be efficiently increased.

On the other hand, the gaseous product deprived of heat by the heat-transfer tube 141 flows into the heat-transfer tube 142 through the coupling tube 143, where the gaseous product is subjected to heat exchange with water between the pressure vessel 101 and the reaction vessel 102 to decrease its temperature to a predetermined temperature, and then the gaseous product is discharged to the outside of the pressure vessel 101 through the gaseous product discharge line 105.

In addition, water between the pressure vessel 101 and the reaction vessel 102 increases its temperature through the heat-transfer tube 142 to be brought into a state of subcritical or supercritical water, and functions as a pressure balance fluid backing up the pressure inside the reaction vessel 102. Since a pressure control valve 181 is provided in the water discharge line 108 being a water discharge tube, the pressure inside the reaction vessel 102 and the pressure of water between the pressure vessel 101 and the reaction vessel 102 are measured, and the pressure control valve 181 is feedback-controlled so that the pressure of the water becomes close to the pressure inside the reaction vessel 102, whereby the pressures inside and outside the reaction vessel 102 can be always almost equalized.

Furthermore, the flow of water supplied to between the pressure vessel 101 and the reaction vessel 102 can be kept at a level most suitable for controlling the pressure by the pressure control valve 181 by measuring the temperature inside the pressure vessel 101 and the temperature of the gaseous product at an area of the outlet of the heat-transfer tube 142, and feedback-controlling the flow control valve (flow controlling means) 161 so that the temperatures become close to predetermined temperatures, respectively.

The pressure of water in the heat exchanging vessel 411 equals a sum of the pressure inside the reaction vessel 102 and pressure losses of the introduction tube 135, the back-flow valve 134, the nozzle 103 and the like. However, the pressure losses of the introduction tube 135, the back-flow valve 134, the nozzle 103 and the like are very small compared to the pressure inside the reaction vessel 102, and therefore the pressure inside the heat exchanging vessel 411 is almost equal to the pressure inside the reaction vessel 102. Thus, the pressure inside the heat exchanging vessel 411 also almost equals to the pressure between the pressure vessel 101 and the reaction vessel 102.

As described above, the temperature inside the pressure vessel 101 and the pressure between the pressure vessel 101 and the reaction vessel 102 can be strictly controlled, and the discharge temperature of gaseous product can be more controlled so that the temperature is closer to a desired temperature, compared to the first embodiment.

In addition, an action effect equivalent to that of the first embodiment is exhibited.

Furthermore, in the case of the second embodiment, even if the back-flow valve 134 is not provided, a corrosive fluid (hydrochloric acid, etc. ) produced in the reaction vessel 102 enters only the heat exchanging vessel 411, and therefore the pressure vessel 101 is never corroded. Thus, the back-flow valve 134 can be removed.

In addition, in case where the corrosive fluid leaks to between the pressure vessel 101 and the reaction vessel 102, the pressure vessel 101 can be prevented from being corroded by continuously supplying water from the water supply line 106 because the partition plates 115 and 116 are provided.

As described above, according to the present invention, the pressure of water between the pressure vessel and the reaction vessel is kept at a level equivalent to the pressure inside the reaction vessel, whereby the pressures inside and outside the reaction vessel can be almost equalized. Furthermore, water supplied to between the pressure vessel and the reaction vessel is heated to a state of subcritical or supercritical water by heat exchanging means, and functions as a balance fluid having compressibility.

Thus, a reduction in cost can be achieved by reducing the wall thickness of the reaction vessel.

Furthermore, water supplied to between the pressure vessel and the reaction vessel is supplied into the reaction vessel, and is never discharged directly to the outside, thus making it possible to achieve a reduction in energy consumption.

In addition, the temperature of water can be increased utilizing heat of a product passing through the heat exchanging means, and the temperature of the product can be decreased utilizing the water, thus making it possible to achieve a reduction in energy required for increasing the temperature of water and decreasing the temperature of the product.

Furthermore, since it is not required to make the wall surface of the reaction vessel function as a heat-transfer surface, and therefore a thermal insulation material having heat resistance, such as, for example, an oxide such as alumina, a nitride such as silicon nitride and a carbide such as silicon carbide can be provided on the inner wall surface of the reaction vessel. In this case, the pressures inside and outside the reaction vessel can be almost equalized, and the surface of the wall of the reaction vessel hardly undergoes elastic deformation even if the pressure inside the reaction vessel varies, thus making it possible to prevent the thermal insulation material from being cracked even if the thermal insulation material made of fragile material compared to the reaction vessel is used. Thus, durability of the thermal insulation material can be improved.

Furthermore, according to the present invention, water supplied from the second water supply line to the heat exchanging vessel is heated by the heat-transfer tube in the heat exchanging vessel, and then ejected into the reaction vessel from the water supplying means, thus making it possible to efficiently increase the temperature of water to be supplied into the reaction vessel.

In addition, water supplied to between the pressure vessel and the reaction vessel can be heated to a state of subcritical water or supercritical water by the heat-transfer tube not covered with the heat exchanging vessel, and made to function as a balance fluid having compressibility.

Furthermore, according to the present invention, since backflow preventing means accepting only a flow of water into the water supplying means is provided, there is no possibility that a corrosive fluid produced in the reaction vessel flows backward through the flow path of the water supplying means, when apparatus is urgently stopped, for example. Thus, for example, it is possible to prevent a situation in which a corrosive fluid flows out to between the pressure vessel and the reaction vessel to corrode the inner surface of the pressure vessel.

Furthermore, according to the present invention, a cylindrical partition plate is so situated as to form a multiple-cylinder with the outer cylinder portion and the inner cylinder portion outside the heat exchanging means between the outer cylinder portion and the inner cylinder portion, and therefore after water flowing in through the water inlet is flowed through the outer cylinder portion and the partition plate to one end in the axial direction, the temperature of the water by the heat exchanging means can be increased. Thus, an area along the inner surface of the pressure vessel is constituted by a type of insulation layer, so that the thickness of the thermal insulation material placed on the outer cylinder portion can be reduced or the thermal insulation material is no longer needed.

In addition, since radiant heat generated from the heat exchanging means can be blocked by the partition plate, an increase in temperature of the outer cylindrical portion can be inhibited. If the partition plate is warmed with radiant heat, the heat is easily transferred to water, efficiency of increase in temperature of water is further improved.

Furthermore, according to the present invention, partition plates each having an opening at one end in the axial direction and partition plates each having an opening at the other end in the axial direction are situated alternatingly in the radial direction, and therefore after water flowing in through the water inlet is moved along the inner surface of the outer cylinder portion to one end in the axial direction, the water can be moved to the other end in the axial direction between next plates. That is, any number of layers through witch water moves can be formed along the outer cylinder portion, thus making it possible to improve the thermal insulation capability of this area.

Furthermore, according to the present invention, since pressure adjusting means for adjusting a pressure of water between the pressure vessel and the reaction vessel is provided, the pressure of water can be adjusted according to a set pressure of the pressure adjusting means. In addition, the pressure inside the pressure vessel and the pressure of water between the pressure vessel and the reaction vessel is measured, and the pressure adjusting means is feedback-controlled so that the pressure of water between the pressure vessel and the reaction vessel approximates the pressure inside the reaction vessel, whereby the pressures inside and outside the reaction vessel can be almost equalized constantly.

A method and apparatus for reforming a hydrocarbon based heavy raw material according to the present invention will now be described.

(Third Embodiment)

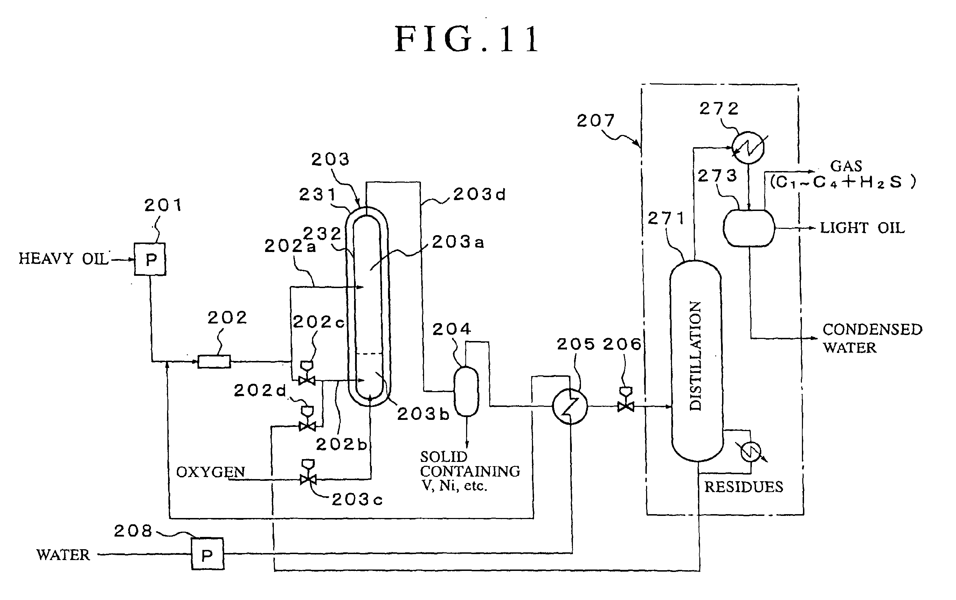

Figure 11 shows a reforming apparatus shown as the third embodiment of the present invention for performing a method for reforming a hydrocarbon based heavy raw material. The reforming apparatus comprises a raw material supply pump 201, a line mixer (mixer) 202, a reactor 203, a solid separator 204, a heat exchanger 205, pressure reducing valve 206, a reformed oil distillation and separation apparatus 207, a water supply pump 208 and the like.

The raw material supply pump 201 supplies heavy fuel oil being atmospheric residues and vacuum residues after crude oil is cracked by atmospheric or vacuum distillation and heavy oil (heavy raw material) such as asphalt to the line mixer 202 under a high pressure in the case of oil refining equipment. On the other hand, the water supply pump 208 supplies water as a liquid to the line mixer 202 through the heat exchanger 205 under a high pressure.

The line mixer 202 mixes heavy oil and water together. A mixture of heavy oil and water mixed by the line mixer 202 is supplied through a first line 202a to a thermal cracking area 203a other than a partial combustion area 203b in the reactor 203, which is located in the upper part of the reactor 203, under the pressure of the raw material supply pump 201 and the water supply pump 208, and also supplied through a second line 202b to the partial combustion area 203b in the reactor 203, which is located in the lower part of the reactor 203. In addition, the second line 202b is provided with a flow control valve 202c for adjusting an amount of the mixture to be supplied to the partial combustion area 203b. Furthermore, the mixture is supplied to the partial combustion area 203b as a heat generation raw material.

The reactor 203 is comprised of a double vessel constituted by a firm pressure vessel 231 covering the outside, and a firm reaction vessel 232 provided inside the pressure vessel 231.

The entire inside of the reaction vessel 232 is constituted by the thermal cracking area 203a, and the partial combustion area 203b is located at the lower end of the reaction vessel 232. That is, part of the inside of the reaction vessel 232, 1. e. part of the thermal cracking area 203a is constituted by the partial combustion area 203b.

In addition, oxygen (oxidant) is supplied through the flow control valve 203c to the partial combustion area 203b.

The solid separator 204 separates away with a filter (not show) solid components contained in reformed oil (reformed raw material) discharged through a discharge line 203d from the upper end of the reactor 203. That is, liquid oil and water is in a gaseous state in the reactor 203, and thus solid components contained in the gas can be removed with the filter. The solid components include components such as metals and minerals contained in heavy oil, for example vanadium (V) and nickel (Ni), and thus resources such as the metals and the like can be collected and used effectively.

The heat exchanger 205 increases the temperature of, for example, normal-temperature water supplied from the water supply pump 208 to as high as 200 to 300°C with high-temperature gas having, as main components, reformed oil and water supplied from the solid separator 204.

The pressure reducing valve 206 reduces the pressure of high-temperature and high-pressure gas having reformed oil and water as main components and supplies the same to a distillation column 271 of the distillation and separation apparatus 207.

The distillation and separation apparatus 207 comprises the distillation column 271, cooling means 272 and a separation tank 273. In the distillation column 271, oil having a low boiling point and water are gasified to move upward, and is cooled by the cooling means 272, and sent to the separation tank 273. The reformed oil is collected as gas such as $CH_4$, $C_2H_6$, $C_3H_8$, $C_4H_{10}$ and $H_2S$, and light oil, in the separation tank 273. In addition, water is collected by an action of separation from light oil in the separation tank 273.

In addition, in the distillation column 271, residues having a high boiling point accumulate in the lower part. The residues are sent under a pressure by a high-pressure pump (not shown), and supplied to the partial combustion area 203b of the reactor 203 through the flow control valve 202d.

A method for reforming a hydrocarbon based heavy raw material using the reforming apparatus will now be described. The inside of the reactor 203 is first heated to about 300°C using nitrogen, and then the inside of the reactor 203 is heated to about 1000°C using a fuel for internal heating such as methane and an oxidant (oxygen). Subsequently, a mixture of heavy oil and water is supplied from the first line 202a and the second line 202b into the reaction vessel 232. Then, the heavy oil in the mixture supplied as a combustion raw material reacts with oxygen to start combustion. Consequently, the thermal cracking area 203a can be kept in a high-temperature and high-pressure state inside the reaction vessel 232, and the partial combustion area 203b having a higher temperature is formed in the lower part in the reaction vessel 232.

An amount of heavy oil supplied from the raw material supply pump 201, an amount of mixture supplied from the flow control valve 202c to the partial combustion area 203b, an amount of residues supplied from the flow control valve 202d to the partial combustion area 203b, an amount of oxygen supplied from the flow control valve 203c to the partial combustion area 203b, an amount of water supplied from the water supply pump 208 and the like are adjusted to perform a normal operation. Adjustments are made so that the pressure is 22 to 35 MPa, the temperature of the partial combustion area 203b is in a predetermined temperature range in the range of 600 to 1000°C, and the temperature of the thermal cracking area 203a other than the partial combustion area 203b is in a predetermined range in the range of 380 to 900°C, and the conditions are maintained.

The raw material reformed in the reactor 203 is continuously discharged through the discharge line 203d, supplied to the solid separator 204, the heat exchanger 205, the pressure reducing valve 206 and the distillation and separation apparatus 207 in succession, and collected as gas and light oil. In addition, resides remaining in the distillation column 271 are supplied again to the partial combustion area 203b in the reactor 203 through the flow control valve 202d and the second line 202b.

According to the reforming apparatus and the reforming method configured as described above, active hydrogen can be produced by partial combustion of heavy oil in the partial combustion area 203b. Thus, this active hydrogen contacts heavy oil, whereby a thiophene based sulfur compound, for example DBT, contained in the heavy oil, incapable of being cracked by normal hydrogen, can be converted into hydrogen sulfide. That is, reforming involving efficient desulfurization can be performed at a low cost and with high efficiency without supplying hydrogen from outside or using a catalyst or the like.

In addition, the heavy oil is lightened according to the reactions (1) and (2) described previously under a water atmosphere at the pressure of 22 MPa or greater and the temperature of 380°C or greater. Thus, the heavy oil can be lightened at a low cost and with high efficiency without supplying hydrogen from outside or using a catalyst or the like.

After thermal cracking in the reactor 203, a slight amount of carbon-based solid component containing metals remains, but the solid component can be separated by the solid separator 204 and discharged to the outside of the system. Residues remaining in the distillation column 271 contain a large amount of sulfur and therefore are not suitable for production of lightened oil, but the residues are of high calorie, and therefore can be supplied to the partial combustion area 203b of the reactor 3 as a combustion raw material. In this case, refractory sulfurized compounds in residues can be cracked, and lightened oil is never badly affected.

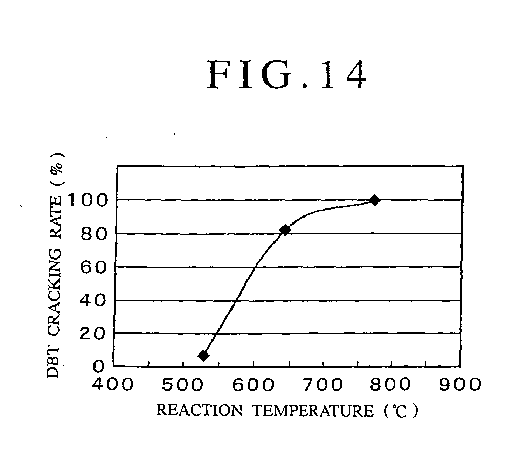

Furthermore, water to be supplied to the reactor 203 is heated to 380°C or greater, which is higher than the critical temperature of water, i.e. 374°C, and is therefore never liquefied even if the pressure inside the reactor 203 reaches 22 to 35 MPa. Since the temperature of the partial combustion area is 600 to 1000°C, active hydrogen is produced in this area. As can be seen from the experimental results of Table 4 and Figure 14, about 81% or greater of DBT can be cracked when the temperature of the partial combustion area 203b in the reactor 203 is 640°C or greater, and about 99% or greater of DBT can be cracked if the temperature is 780°C or greater.

In addition, if the temperature of the partial combustion area 203b increases, the reaction temperature of heavy oil supplied from the upper side also increases, and lightening is advanced, so that the yield of conversion of heavy oil tends to have a large proportion of light gas. In addition, the desulfurization is promoted. On the other hand, if the temperature of the partial combustion area 203b decreases, the yield of conversion of heavy oil tends to have a large proportion of light oil. In this case, desulfurization in light oil declines, but the desulfurization rate is more or less higher compared the case of simple thermal cracking in high-temperature and high-pressure water forming no partial combustion area 203b.

Furthermore, since high-temperature and high-pressure water has an effect of dissolving heavy oil uniformly, a large amount of coke is produced in thermal cracking of the conventional technique while in this method and apparatus, production of coke associated with a thermal cracking reaction is inhibited, thus making it possible to contribute to an improvement in yield of light oil.

(Fourth Embodiment)

The fourth embodiment of this invention will now be described with reference to Figure 12. Here, elements identical to elements described in the third embodiment are given like symbols, and only briefly described. The fourth embodiment is different from the third embodiment in that a second raw material supply pump 211 and a secondary thermal cracking furnace 209 are provided.

Second heavy oil (heavy raw material) different from the above heavy oil is supplied from the second raw material supply pump 211 to a discharge line 203d of a reactor 203 on the exit side.

The second heavy oil is lighter and contains less sulfur and the like compared to the heavy oil described above, and can be reformed, e.g. lightened, by thermal cracking involving no partial combustion. This second heavy oil decreases the temperature of post-thermal cracking lightened oil or the like to be discharged from the reactor 203 by a predetermined amount, and is supplied to the secondary thermal cracking furnace 209.

The secondary thermal cracking furnace 209 thermally cracks mainly the second heavy oil to perform reforming such as lightening using heat generated in the reactor 203, excessive reactive hydrogen and the like. In addition, in the secondary thermal cracking furnace 209, the internal temperature is preferably 380 to 550°C, and retention time of second heavy oil is preferably about 5 to 60 minutes.

According to the reforming apparatus configured as described above, second heavy oil different from the heavy oil can be subjected to reform processing without reducing the processing amount of the heavy oil. Furthermore, excessive heat of the reactor 203 is utilized as heat energy required for thermal cracking, thus making it possible to inhibit an increase in cost of reform processing.

Specific Examples of the present invention will now be described.

Table 1 shows the results of determining light oil yields and residue yields (amount of solid components separated by the solid separator 204) by experiments using heavy oil as vacuum residues produced in the oil refining process.

In Table 1, Examples 1 and 2 are related to experiments where heavy oil was cracked under high-temperature and high-pressure water with the temperature of a thermal cracking area 203a of 480°C and 650°C and the pressure inside the reactor 203 of 25 MPa without carrying out partial combustion. In addition, Comparative Example 1 is related to experiments where heavy oil was cracked (gaseous phase-cracked) without supplying water.

From Table 1, it can be found that Examples 1 and 2 according to the present invention using high-temperature and high-pressure water have improved conversion from heavy oil to light oil, increases yields and extremely reduced amounts of residues, compared to Comparative Example 1 of gaseous phase thermal cracking:

[Table 1]

|  | Example 1 | Example 2 | Comparative Example 1 |
|---|---|---|---|
| Temperature (°C) | 480 | 650 | 480 |
| Pressure (MPa) | 25 | 25 | 0.1 |
| Light oil yield (%) | 78 | 58 |  |
| Residue occurrence (%) | 1 | 2 | 35 |

Table 2 shows the experimental results of comparison of Example 3 with Comparative Examples 2 and 3 in yield of light oil, residual quantity of sulfur and occurrence rate of residual oil for heavy oil as vacuum residues produced in the oil refining process. Furthermore, the residual oil herein refers to vacuum residue oil.

Example 3 is related to experiments where heavy oil was cracked under high-temperature and high-pressure water with the temperature of the thermal cracking area 203a of 550°C and the pressure inside the reactor 203 of 25 MPa, without performing partial combustion.

In addition, Comparative Example 2 is reference data from other literature related to the thermal cracking of heavy oil using the Eureka process that is an existing thermal cracking process, and Comparative Example 3 is reference data from other literature related to the thermal cracking of heavy oil using the HSC process that is an existing thermal cracking process.

Furthermore, in Table 2, V represents vanadium, and ND represents a detection lower limit or smaller value.

From Table 2, it can be found that Example 3 according to the present invention is excellent in yield of light oil, capability of removing sulfur, capability of removing impurities (e.g. nitrogen is reduced), and capability of reducing residual oil, compared to Comparative Examples 2 and 3.

[Table 2]

|  | Example 3 | Comparative Example 2 | Comparative Example 3 |
|---|---|---|---|
| Raw material | Residue on vacuum distillation Sulfur: 5.6% V: 40 ppm | Residue on vacuum distillation Sulfur: 3.9% V: 202 ppm | Residue on vacuum distillation Sulfur: 3.9% V: 209 ppm |
| Light oil product (boiling point: 200°C or lower) | Yield: 58-78% Sulfur: 0.1% V: ND | 15% Sulfur: 1.12% V: ND | 12% Sulfur: 2.3% V: ND |
| Residual oil occurrence (cracked residual oil + residue) | 11 - 16% | 80.5% | 81.5% |

The products obtained in Examples 1, 2 and 3, together with products of Tables 1 and 2, were comprised of gas, oil product (light oil), produced heavy oil, residues and the like, but it was further found from analyses that they were comprised of products having characteristics shown in Table 3. That is, from Table 3, it can be found the products obtained in Examples 1, 2 and 3 could be effectively used as products for both gas and oil product.

[Table 3]

| Item | Features of product |
|---|---|
| Gaseous product | $H_2$, CO, $CO_2$, $CH_4$, $C_2$-$C_4$ compounds, $H_2S$ |

[Table 3]   (continued)

| Item | Features of product |
|---|---|
| Oil product | (1) Aromatic compounds (toluene, xylene, benzene, etc.)<br>(2) Straight-chain compounds (heptane, octane, etc.)<br>(3) Oxygen containing compounds (phenols, etc.) |
| Produced heavy oil | H/C = 0.8 - 1.2 Metals of V and Ni contained |
| Residue | H/C = 0.5 - 0.7 Metals of V and Ni contained |

Table 4 shows the results of experiments on cracking properties where the partial combustion method according to the present invention was used for thiophene based sulfur compounds that are the most refractory of sulfur forms contained in heavy oil.

The sulfur remaining at a rate of 0.1% in Example 3 in Table 2 is the thiophene based sulfur compound, and it can be said that if this sulfur compound can be cracked, sulfur compounds in heavy oil can be almost completely cracked and desulfurized.

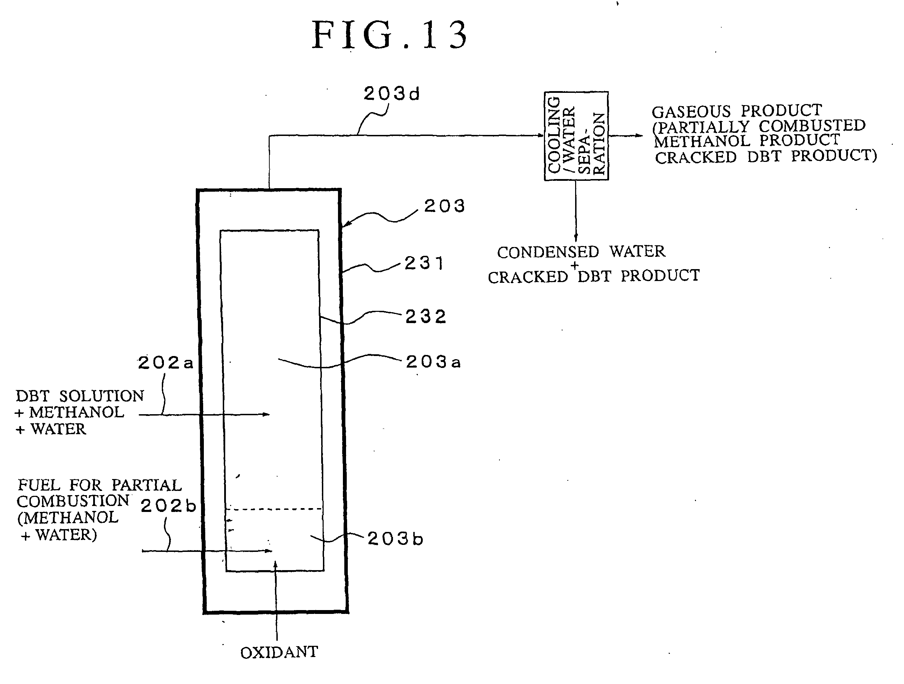

Experiments were conducted for respective conditions of Examples 4, 5, 6 and Comparative Example 4 using an apparatus shown in Figure 13. Furthermore, for the experimental apparatus shown in Figure 13, elements identical to the elements shown in Figure 11 are given like symbols, and descriptions thereof are not presented.

A mixture of methanol and water as a combustion raw material and hydrogen peroxide as an oxidant were supplied to the partial combustion area 203b.

In addition, a mixture of a DBT solution being one of thiophene based compounds, methanol and water was supplied to the thermal cracking area 203a on the upper side of the partial combustion area 203b.

Example 4 has conditions such that the temperature of the partial combustion area 203b is 560°C, the temperature of the thermal cracking area 203a other than the partial combustion area 203b is 510°C, and the pressure inside the reaction vessel 232 is 25 MPa.

Example 5 has conditions such that the temperature of the partial combustion area 203b is 640°C, the temperature of the thermal cracking area 203a other than the partial combustion area 203b is 590°C, and the pressure inside the reaction vessel 232 is 25 MPa.

Example 6 has conditions such that the temperature of the partial combustion area 203b is 780°C, the temperature of the thermal cracking area 203a other than the partial combustion area 203b is 720°C, and the pressure inside the reaction vessel 232 is 25 MPa.

Comparative Example 4 has conditions such that no partial combustion is provided, the temperature of the thermal cracking area 203a is 640°C, and the pressure inside the reaction vessel 232 is 25 MPa.

From Table 4 and Figure 14, it can be found that by increasing the temperature of the partial combustion area 203b, the cracking rate of the thiophene based sulfur compound being DBT increases such that 81% or more of DBT can be cracked at a temperature of 640°C or higher, and 99% or more of DBT can be cracked at a temperature of 780°C or higher. Thus, the temperature of the partial combustion area 203b is adjusted preferably to 600°C or higher, more preferably 640°C or 780°C or higher. However, in consideration of heat resistance of the reactor 203, the temperature of the partial combustion area 203b is adjusted preferably to 1000°C or lower.

In addition, the temperature of the thermal cracking area 203a other than the partial combustion area 203b is preferably adjusted to a temperature of 380°C or higher, more preferably 450°C or higher. However, since an excessive increase in temperature of partial combustion area 203b does not bring about a change in the converted product, the temperature of the partial combustion area 203b is preferably 1000°C or lower as described above, and hence the temperature of the thermal cracking area 203a is adjusted preferably to 900°C or lower.

Furthermore, it can be considered that DBT could be cracked in the reactor 203 owing to CO (carbon monoxide) and the like in an active hydrogen and supercritical water field produced by partial combustion. That is, it can be estimated that CO and the like in an active hydrogen and supercritical water field contacted the DBT solution to cause a desulfurization reaction to proceed efficiently in short time. Furthermore, the supercritical water field refers to a field under a high-temperature and high-pressure water atmosphere with the temperature of 380 to 1000°C and the pressure of 7 to 35 MPa (preferably 22.4 to 35 MPa).

[Table 4]

| | Example 4 | Example 5 | Example 6 | Comparative Example 4 |
|---|---|---|---|---|
| Oxygen ratio on partial combustion | | | | |
| Reaction temperature | 560 | 640 | 780 | 640 |

[Table 4]   (continued)

|  | Example 4 | Example 5 | Example 6 | Comparative Example 4 |
|---|---|---|---|---|
| Pressure (MPa) | 25 | 25 | 25 | 25 |
| Residence time (s) | About 5 | About 5 | About 5 | About 5 |
| Representative gases produced by partial combustion | $H_2$, CO, $CH_4$, $CO_2$ | ditto | Ditto | - |
| DBT cracking rate (%) | 7 | 81 | 99 | 2 |
|  |  |  |  |  |

Furthermore, in the first and second embodiments described above, the partial combustion area 203b is provided in the lower part in the reaction vessel 232, but the partial combustion area 203b may be provided in the upper part of the reaction vessel 232, or in other position.

In addition, heavy oil is cracked as a heavy raw material, but a hydrocarbon based heavy raw material such as refractory wastes may be cracked.

Furthermore, water is used as a reforming medium, but, for example, $CO_2$ (carbon dioxide) with water added thereto may be used as the reforming medium. In this case, the raw material can be lightened according to the formulae (1) and (2) described above.

In addition, active hydrogen and CO can be produced by partial combustion, and therefore DBT can be reliably cracked.

If $CO_2$ with water added thereto is used as a reforming medium,

it is preferable that the pressure inside the reactor 203 is adjusted to 7.5 to 35 MPa,

the temperature of the partial combustion area 203b is adjusted to 600 to 1000°C, and

the temperature of the thermal cracking area 203a other than the partial combustion area 203b is adjusted to 380 to 900°C.

As described above, according to the present invention, reactive hydrogen can be produced by subjecting the heavy raw material to partial combustion, thus making it possible to crack DBT contained in the heavy raw material. Thus, reforming involving high-efficiency desulfurization can be performed at a low cost and with high efficiency without supplying hydrogen from outside or using a catalyst or the like.

In addition, in the reactor, the heavy raw material can be lightened at a low cost and with high efficiency without supplying hydrogen from outside or using a catalyst or the like.

Furthermore, according to the present invention, residues produced by fractional distillation after reforming are used as a combustion raw material, and such residues can be used effectively. Furthermore, even if the residues contain a large amount of DBT described above, high-efficient desulfurization can be achieved with active hydrogen produced during partial combustion.

In addition, according to the present invention, the lightened raw material after being reformed and the reforming medium are in a high-temperature and high-pressure gas state, and thus solid components contained in this gas component can be easily separated away with a filter, cyclone or the like. The solid components include components such as metals, minerals and the like contained in the heavy raw material, and thus resources such as the metals and the like can be effectively collected.

Furthermore, according to the present invention, since the temperature of the partial combustion area is 600 to 1000°C, active hydrogen can be produced in the partial combustion area. Therefore, DBT in the heavy raw material can be sufficiently cracked.

In addition, since the temperature of the area other than the partial combustion area is set to 380 to 900°C, the heavy raw material can be lightened in this area. Of course, the heavy raw material is lightened in the partial combustion area, and desulfurization by active hydrogen is performed in the area other than the partial combustion area.

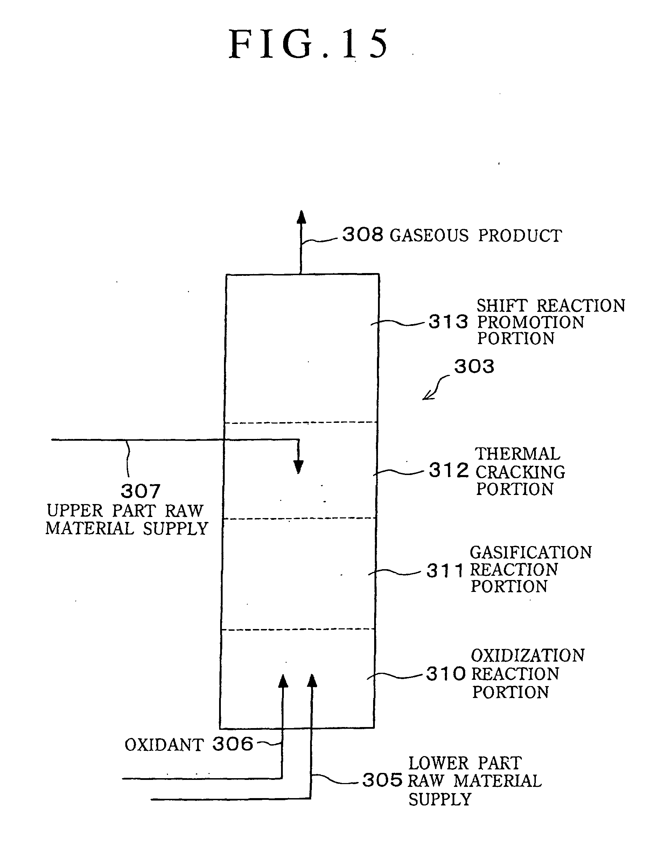

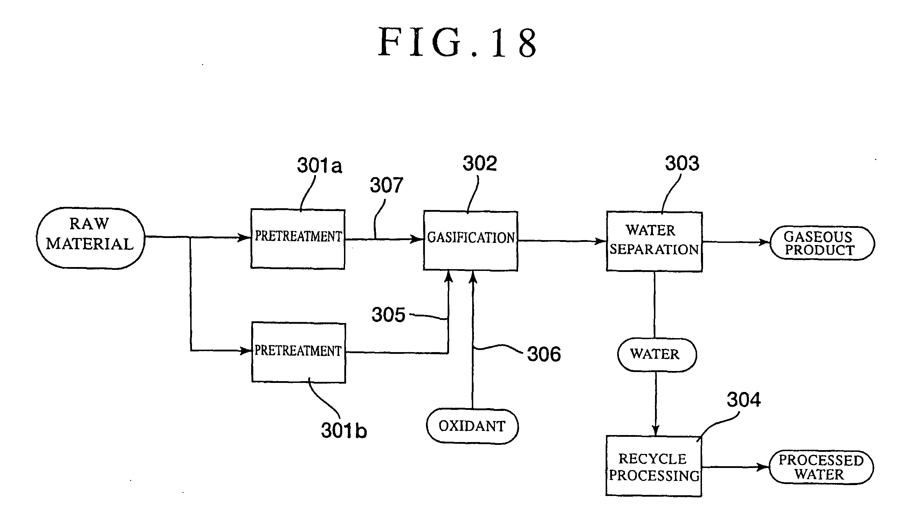

A method for gasifying a hydrocarbon based raw material of the present invention will now be described with reference to Figures 15 to 18.

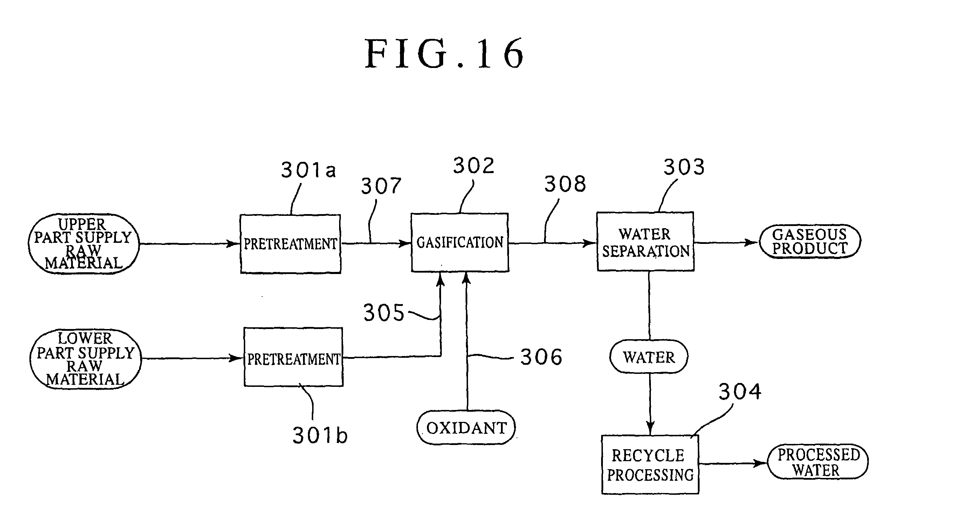

First, Figures 15 and 16 each show a hydrocarbon based raw material gasification system for performing one embodiment of the present invention, and this gasification system is approximately comprised of pretreatment systems 301a and 301b pretreatment a hydrocarbon based raw material (hereinafter referred to as raw material) such as waste plastic or organic sludge to be processed, a gasification reactor 302 filled with supercritical water or high-temperature and high-pressure water at 22 MPa or greater and gasifying the preprocessed raw material, a gas-liquid separation apparatus 303 separating water from gas discharged from the gasification reactor 302, and a water pretreatment system 304 recycle-processing water separated by the gas-liquid separation apparatus 303. Furthermore, the water pretreatment system 304 is not necessarily provided if no impurities are contained in gas discharged from the gasification reactor 302 depending on the type of raw material.

Here, the pretreatment systems 301a and 301b subject a raw material supplied from the upper part of the gasification reactor 302 and a raw material supplied from the lower part, respectively, to pretreatment suitable for each raw material, and a crushing apparatus, deashing apparatus, dechlorination apparatus, slurrying apparatus or the like is selected depending on the type of the raw material.

As shown in Figure 15, a lower part raw material supply line 305 for supplying a raw material preprocessed by the pretreatment system 301b and a oxidant supply line 306 for supplying an oxidant such as air, pure oxygen or hydrogen peroxide are connected to the bottom of the gasification reactor 302.

In addition, an upper part raw material supply line 307 for supplying a raw material preprocessed by the pretreatment system 301a into the gasification reactor 302 is connected to the upper part of the gasification reactor 302, a discharge line 308 for discharging gas produced by gasification of the raw material therein and high-temperature and high-pressure water is connected to the ceiling part, and this discharge line 308 is guided to the gas-liquid separation apparatus 303.

One embodiment of gasification method according to the present invention using the gasification system having the configuration described above will now be described.

First, a preprocessed raw material is supplied from the bottom of the gasification reactor 302 filled with, for example, supercritical water having a pressure of 25 MPa through the lower part raw material supply line 305, and an oxidant (pure oxygen in this embodiment), the amount of which is equal to or greater than an amount required for completely oxidizing the raw material, is supplied from the oxidant supply line 306. In addition, the preprocessed raw material in the pretreatment system 301a is supplied from the upper part of the gasification reactor 302. In this connection, supercritical water in the gasification reactor 302 may be previously filled in the gasification reactor 302 from other supply line, or may be supplied together with the raw material from the lower part raw material supply line 305.

As a result, in the gasification reactor 302, an oxidation reaction portion 310, a gasification reaction portion 311, and a thermal cracking portion 312 at a position below the upper part raw material supply line 307 and a shift reaction promotion portion 313 at a position above the upper part raw material supply line 307 are formed in the ascending order.

In the oxidization reaction portion 310, hydrocarbon ($H_xC_y$) as a raw material supplied from the lower part of the gasification reactor 302 is completely oxidized with an excessive oxidant in supercritical water ($H_2O$) as shown by the formula (3), whereby a fluid containing carbon dioxide ($CO_2$) gas is produced, and heat is generated by the oxidization reaction described above.

$$H_xC_y + mO_2 + nH_2O \rightarrow aCO_2 + bO_2 + cH_2O + heat \qquad (3)$$

On the other hand, in the thermal cracking portion 312, the raw material supplied from the upper part of the gasification reactor 302 is cracked mainly with heat generated in the oxidization reaction portion 310 to produce gas having methane ($CH_4$) and hydrogen ($H_2$) as main components and residues having carbon (C) as a main component as shown by the formula (4). The residues flow downward to the gasification reaction portion 311 in the lower part.

$$H_xC_y + heat \rightarrow CH_4 + H_2 + C \qquad (4)$$

In the gasification reaction portion 311, a gasification reaction proceeds in which residues flowing downward from the thermal cracking portion 312 react with carbon dioxide produced in the oxidization reaction portion 310, and unreacted excessive oxygen and high-temperature and high-pressure water, under a high-temperature atmosphere by reaction heat generated in the oxidization reaction portion 310 shown by the formula (3), to produce a mixed gas containing carbon monoxide and hydrogen, as shown in the following formulae.

$$C + 1/2O_2 \rightarrow CO + heat \qquad (5)$$

$$C + CO_2 \rightarrow 2CO \qquad (6)$$

$$C + H_2O \rightarrow CO + H_2 \qquad (7)$$

Furthermore, in this gasification reaction portion 311, water is consumed according to the formula (7), and gas is produced by the gasification reaction and the like, whereby the partial pressure of water drops to cause a transition from supercritical water to a high-temperature and high-pressure water atmosphere.

At this time, particularly in this gasification method, carbon dioxide produced in the oxidization reaction portion 310 functions as a gasification agent for the residues produced in the thermal cracking portion 312 to promote the gasification reaction of the residues, as shown by the formula (6). In addition, the reactions shown by the formulae (6) and (7) in this gasification reaction portion 311 are endothermic reactions, but reaction heat generated according to the formula (5) is added to reaction heat generated in the oxidization reaction portion 310 and as a result, the gasification reaction proceeds while a desired temperature is maintained.

In this connection, optimum temperatures in the oxidization reaction portion 310, the gasification reaction portion 311 and the thermal cracking portion 312 should be determined according to the type of supplied raw material and thermal cracking and gasification characteristics, but it is preferable that the temperature in the oxidization reaction portion 310 is in the range of 400 to 1000°C, the temperature in the gasification reaction portion 311 is in the range of 600 to 1000°C, and the temperature in the thermal cracking portion 312 is in the range of 600 to 800°C.

In addition, the ratio of the oxidant supplied to the gasification reactor 302 is similarly dependent on the characteristics of the raw material, but is preferably in the range of 0.5 to 1.5 to the amount of oxygen required for completely oxidizing the total amounts of raw materials supplied from the upper and lower parts in the oxygen ratio.

Furthermore, the raw material supplied from the bottom of the gasification reactor 302 is only required to be capable of being completely oxidized and also ensuring a predetermined heat generation rate. Thus, such raw materials may include, aside from organic wastes of good quality, materials containing a small amount of hydrocarbon such as organic sludge by flocculent precipitation, used tea leaves and paper.

On the other hand, the raw material supplied from the upper part of the gasification reactor 302 is required to be cracked to produce residues having carbon as a main component and cause gasification to occur, and such raw materials include, for example, raw materials containing a large amount of hydrocarbon, such as organic sludge, waste plastics and waste oil.

Thus, it is preferable that as shown in Figure 16, the raw material to be supplied from the upper part and the raw material to be supplied from the lower part are previously separated, and pretreatment systems 301a and 301b suitable for those raw materials are installed.

Then, in the shift reaction promotion portion 313, as gas having as main components CO and $H_2$ produced in the gasification reaction portion 311 and the thermal cracking portion 312 and containing, in addition thereto, a small amount of $CH_4$ and the like passes to above the gasification reactor 302, a field having a high partial pressure of vapor with high-temperature and high-pressure water ($H_2O$) is maintained and also the temperature gradually decreases, whereby the gas is converted into hydrogen-rich gas by an aqueous gas shift reaction as shown by the formula (8).

$$CO + H_2O \rightarrow H_2 + CO_2 \tag{8}$$

In this way, the gaseous product containing, as a main component, $H_2$ produced in the shift reaction promotion portion 313 in the upper part of the gasification reactor 302 and containing, in addition thereto, $CO_2$ and a small amount of $CH_4$ and the like, and high-temperature and high-pressure water are discharged from the discharge line 308 and guided to the gas-liquid separation apparatus 303. They are cooled in the gas-liquid separation apparatus 303, whereby the high-temperature and high-pressure water is separated as water to obtain only gas such as $H_2$ and $CO_2$.

The gaseous product obtained in the gas-liquid separation apparatus 303 has $H_2$ and $CO_2$ as main components in the case where pure oxygen is used as an oxidant as in this embodiment, and thus if a step of separating $CO_2$ is added, chemical recycling can be performed with $H_2$ and $CH_4$ being combustible gas and $CO_2$ gas as a resource.

As described above, according to the method for gasifying a hydrocarbon based raw material, having the configuration described above, raw materials are supplied from the bottom and the upper part of the gasification reactor 302 and an oxidant is supplied from the bottom, and the oxidization reaction portion 310, the gasification reaction portion 311, and the thermal cracking portion 312 at a position below the upper part raw material supply line 307 and the shift reaction promotion portion 313 at a position above the upper part raw material supply line 307 are formed in the ascending order in the gasification reactor 302, and the raw materials are gasified by the reactions shown by the formulae (3) and (8), thus making it possible to efficiently gasify various kinds of raw materials under lower temperature conditions compared to the conventional gasification method.

In addition, a reduction in loads on the environment can be achieved by using high-temperature and high-pressure water including supercritical water, and water can easily be separated while cleaning gas to obtain useful gas only by cooling gaseous product taken out from the gasification reactor 302 and high-temperature and high-pressure water.

At this time, reaction heat generated in the oxidization reaction portion 310 and the gasification reaction portion 311 as shown by the formulae (3) and (5) can be used for thermal cracking of the raw material supplied from the upper part in the thermal cracking portion 312, and $CO_2$ produced in the oxidization reaction portion 310 can be made to function as an agent for gasification of residues flowing downward from above in the gasification reaction portion 311.

As a result, characteristics and reaction heat of gas produced by various kinds of reactions in the gasification reactor 302 can be maximally utilized, and raw materials are supplied from two lines of the bottom and upper part of the gasification reactor 302, and therefore by making some arrangement such that a raw material containing a smaller amount of hydrocarbon is supplied from the bottom of the gasification reactor 302 while a raw material containing a larger amount of hydrocarbon is supplied from the upper part of the gasification reactor 302, various hydrocarbon based raw materials such as biomasses such as organic sludge, used tea leaves and paper, resource wastes such as waste oil and waste plastic, and fossil fuels or unused heavy resources can be gasified with high efficiency, and hence a waste recycle system having high efficiency and reduced environmental loads can be achieved.

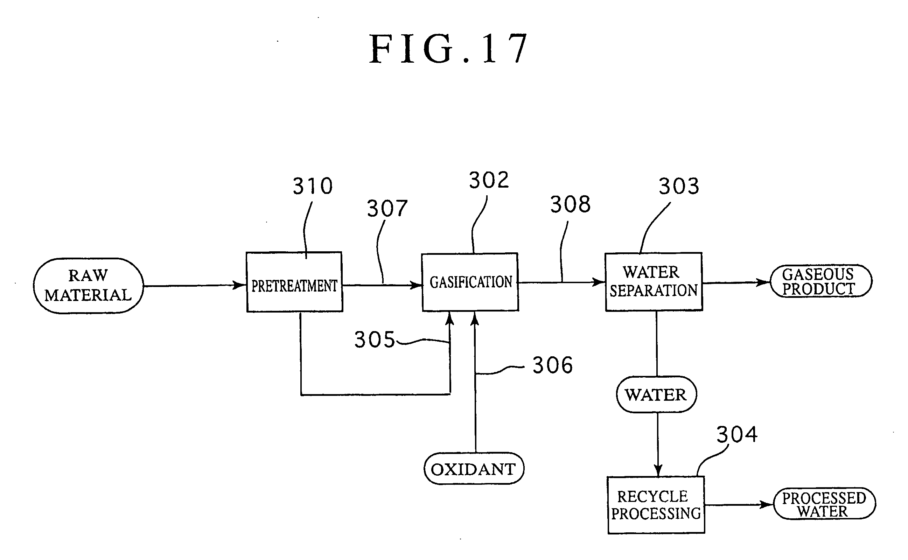

Furthermore, in the above embodiment, the raw material to be supplied from the bottom of the gasification reactor 302 and the raw material to be supplied from the upper part of the gasification reactor 302 are preprocessed in the pretreatment systems 301a and 301b, respectively, through independent lines, and supplied to the gasification reactor 302, but the invention is not limited thereto and as shown in Figure 17, the same raw material may be preprocessed in the same pretreatment system 310, and supplied to the gasification reactor 302 through the lower part raw material supply line 305 and the upper part raw material supply line 307. Alternatively, the same raw material may be subjected to different pretreatment each suitable for supply from the bottom or upper part of the gasification reactor 302 in the pretreatment systems 301a and 301b, and supplied to the gasification reactor 302.

As described above, according to the present invention, the raw material is supplied from the bottom and the upper part of the gasification reactor and the oxidant is supplied from the bottom of the gasification reactor, and the oxidization reaction portion, the gasification reaction portion, the thermal cracking portion and the shift reaction promotion portion are formed in the ascending order in the gasification reactor, and the characteristics and reaction heat produced by the various kinds of reactions in the reaction portions in the gasification reactor are maximally utilized, and by making some arrangement for supply of the raw material from two lines of the bottom and upper part of the gasification reactor, various hydrocarbon based raw materials such as biomasses such as organic sludge, used tea leaves and paper, resource wastes such as waste oil and waste plastic, and fossil fuels or unused heavy resources can be gasified with high efficiency under lower temperature conditions compared to the conventional gasification method, and reused as useful gas.

## Claims

1. A thermal cracking/gasification reaction apparatus comprising a reaction vessel allowing a thermal cracking/gasification reaction to proceed and having portions for combustion, gasification and thermal cracking, with the reaction vessel provided therein with multiple raw material and fluid supplying nozzle means.

2. A thermal cracking/gasification reaction apparatus according to claim 1, wherein the multiple raw material and fluid supplying nozzle means has at least two of an upward first supply nozzle for supplying a raw material having a low heat generation rate or a raw material adjusted to have a low heat generation rate, water and an oxidant from the lower part of the reaction vessel, a downward second supply nozzle for producing oil by thermal cracking from the middle position in the reaction vessel and forming residues to be flowed downward, and an upward third supply nozzle for supplying a raw material to be cracked from the upper position in the reaction vessel.

3. A thermal cracking/gasification reaction vessel according to claim 2, further comprising means for multiple contact between a raw material to be cracked from the upper position in the reaction vessel and high-temperature gaseous product ascending from the lower part, and a downward water spray nozzle capable of supplying water from the upper part of the means for multiple contact and applying any temperature gradient to the means for multiple contact.

4. A thermal cracking/gasification reaction vessel according to claim 3, wherein the reaction vessel has a multiple-tube structure.

5. A thermal cracking/gasification reaction apparatus according to claim 4, further comprising, between a pressure vessel for maintaining a high pressure and a reaction portion allowing thermal cracking/gasification to be carried out, a thermal cracking portion being capable of individually preheating thermal cracking/gasification raw materials, having partial combustion portion causing partial combustion in a gasification portion in the reaction portion, and supplying the raw material into a high-temperature gas material after partial combustion to cause the raw material to be cracked to produce a cracked oil and a cracked gas.

6. A thermal cracking and gasification reaction apparatus comprising:

a thermal cracking/gasification reaction apparatus comprising a reaction vessel allowing a thermal cracking/gasification reaction to proceed and having portions for combustion, gasification and thermal cracking, with the reaction vessel provided therein with multiple raw material and fluid supplying nozzle means;
a first separator separating solid components from a product after thermal cracking and gasification;
a heat exchanger collecting heat from a produced fluid after separation;
a second separator removing heavy oil and water by cooling/decompression of the produced fluid after collection of heat; and
a multiple distillation column separating/collecting light oil and light gas from the produced fluid after removal of heavy oil and water.

7. A thermal cracking/gasification reaction apparatus according to claim 6, wherein the reaction vessel is separated into the partial combustion portion and the thermal cracking portion, and the partial combustion portion and the thermal cracking portion communicate with each other via a neck portion, so that a high-pressure gaseous fluid produced in the partial combustion portion passes through a flow path of the neck portion and flows downward as a rectified gaseous fluid.

8. A thermal cracking and gasification method, wherein a hydrocarbon raw material supplied from the lower part is oxidized with an oxidant in an oxidization and combustion portion to produce mixed gas containing carbon dioxide and the excessive oxidant and generate reaction heat,
the hydrocarbon raw material supplied from the upper part is cracked in the lower part in the thermal cracking portion to produce residues of oil, cracked gas and a solid, and
the residues flowing downward from the thermal cracking portion are constantly heated by the heat of reaction in the gasification reaction portion, and the residues are made to react with the carbon dioxide, excessive oxidant and high-temperature and high pressure water produced in the oxidization reaction portion to produce mixed gas containing carbon monoxide and hydrogen, whereby the entire raw material including low quality and high quality is processed.

9. A high-temperature and high-pressure water atmosphere reaction processing apparatus, wherein:

a high-temperature and high-pressure water atmosphere reaction processing apparatus has a double-vessel structure with a reaction vessel placed inside a pressure vessel,
the reaction vessel is provided with raw material supplying means for supplying a raw material containing an organic substance into the reaction vessel, oxidant supplying means for supplying an oxidant into the reaction vessel, and water supplying means for supplying water into the reaction vessel,
heat exchanging means, into which a high-temperature and high-pressure product produced through a reaction between the raw material and the oxidant proceeding under an atmosphere of water in the reaction vessel is introduced, is provided between the pressure vessel and the reaction vessel,
the pressure vessel is provided with a water inlet communicating with a water supply line for supplying water to between the pressure vessel and the reaction vessel, and a passage port for introducing a discharge line for the product, communicating with the heat exchanging means, and
the water supplying means is provided with a flow path introduced between the pressure vessel and the reaction vessel via the water inlet and supplying the water heated by the heat exchanging means into the reaction vessel.

10. A high-temperature and high-pressure water atmosphere reaction processing apparatus, wherein:

a high-temperature and high-pressure water atmosphere reaction processing apparatus has a double-vessel structure with a reaction vessel placed inside a pressure vessel,
the reaction vessel is provided with raw material supplying means for supplying a raw material containing an organic substance into the reaction vessel, oxidant supplying means for supplying an oxidant into the reaction vessel, and water supplying means for supplying water into the reaction vessel,
heat exchanging means having a heat-transfer tube, into which a high-temperature and high-pressure product produced through a reaction between the raw material and the oxidant proceeding under an atmosphere of water in the reaction vessel is introduced, is provided between the pressure vessel and the reaction vessel, the pressure vessel is provided with a water inlet communicating with a water supply line for supplying water to between the pressure vessel and the reaction vessel, and a passage port for introducing a discharge line for the product, communicating with the heat-transfer tube,

the heat exchanging means is provided with a heat exchanging vessel surrounding a part of the heat-transfer tube into which the product is introduced, and

the heat exchanging vessel is coupled to a second water supply line for supplying water into the heat exchanging vessel, and an introduction flow path for introducing water heated by the heat-transfer tube in the heat exchanging vessel into the water supplying means.

11. A high-temperature and high-pressure water atmosphere reaction processing apparatus according to claim 9, further comprising backflow preventing means accepting only a flow of the water into the water supplying means.

12. A high-temperature and high-pressure water atmosphere reaction processing apparatus according to claim 9, wherein the double-vessel structure is such that an outer cylinder portion constituting an outer periphery of the pressure vessel and an inner cylinder portion constituting an outer periphery of the reaction vessel are situated in a double cylinder form, a cylindrical partition plate so situated as to form a multiple-cylinder with the outer cylinder and the inner cylinder is provided outside the heat exchanging means between the outer cylinder and the inner cylinder, and the partition plate is provided with an opening at one end in the axial direction.

13. A high-temperature and high-pressure water atmosphere reaction processing apparatus according to claim 12, further comprising a plurality of such partition plates, wherein the partition plates are situated such that partition plates each having an opening at one end in the axial direction and partition plates each having an opening at the other end in the axial direction are alternatingly placed in the radial direction.

14. A high-temperature and high-pressure water atmosphere reaction processing apparatus according to claim 9, further comprising pressure adjusting means for adjusting a pressure of the water between the pressure vessel and the reaction vessel.

15. A method for reforming a hydrocarbon based heavy material, wherein a mixture of a hydrocarbon based heavy raw material and a reforming medium is supplied into a reactor under a high-temperature and high-pressure reforming medium atmosphere and part of the mixture is supplied into the reactor as a combustion raw material and combusted, whereby a partial combustion area of higher temperature is formed in the reactor and the inside of the reactor is kept under a high-temperature and high-pressure reforming medium atmosphere, and the heavy raw material is reformed by hydro-cracking with reactive hydrogen produced in the partial combustion area and the heavy raw material is reformed by thermal cracking under a reforming medium atmosphere.

16. A method for reforming a hydrocarbon based heavy raw material, wherein a mixture of a hydrocarbon based heavy raw material and a reforming medium is supplied into a reactor under a high-temperature and high-pressure reforming medium atmosphere and part of the mixture is supplied into the reactor as a combustion raw material and combusted, whereby a partial combustion area of higher temperature is formed in the reactor and the inside of the reactor is kept under a high-temperature and high-pressure reforming medium atmosphere, and the heavy raw material is reformed by hydro-cracking with reactive hydrogen produced in the partial combustion area and the heavy raw material is reformed by thermal cracking under a reforming medium atmosphere, and then the reformed raw material is cracked by distillation processing, and residues produced as a result of the cracking are supplied into the reactor as part of the combustion raw material.

17. A method for reforming a hydrocarbon based heavy raw material according to claim 15, wherein the heavy raw material is reformed by hydro-cracking with reactive hydrogen produced in the partial combustion area and the heavy raw material is reformed by thermal cracking under a reforming medium atmosphere, and then solid components are separated from gas components in which the reformed raw material and the reforming medium coexist.

18. A method for reforming a hydrocarbon based heavy raw material according to claim 15, wherein water is used as the reforming medium, and the pressure inside the reactor is kept at 7 to 35 MPa (preferably 22 to 35 MPa) and the temperature of the partial combustion area is kept at 600 to 1000°C by combustion of the combustion raw material, and areas other than the partial combustion area in the reactor are adjusted to have a temperature of 380 to 900°C.

**19.** An apparatus for reforming a hydrocarbon based heavy raw material, comprising a mixer for mixing a hydrocarbon based heavy raw material and a reforming medium, and a reactor in which the mixture mixed by the mixer is accepted under a high-temperature and high-pressure reforming medium atmosphere and part of the mixture is accepted as a combustion raw material and combusted, whereby the inside is kept under a high-temperature and high-pressure reforming medium atmosphere and a partial combustion area of higher temperature is formed there, and the heavy raw material is reformed by hydro-cracking with reactive hydrogen produced in the partial combustion area and the heavy raw material is reformed by thermal cracking under a reforming medium atmosphere.

**20.** An apparatus for reforming a hydrocarbon based heavy raw material according to claim 19, wherein the apparatus comprises a distillation column cracking the raw material reformed in the reactor by distillation processing, and residues produced as a result of cracking in the distillation column are supplied into the reactor as part of the combustion raw material.

**21.** A method for gasifying a hydrocarbon based raw material, wherein a hydrocarbon based raw material and an oxidant, the amount of which is equal to or greater than an amount required for fully oxidizing the hydrocarbon based raw material, are supplied from the lower part of a gasification reactor filled with high-temperature and high pressure water of 22 MPa or greater, and the hydrocarbon based raw material is supplied from the upper part of the gasification reactor, whereby an oxidization reaction portion, a gasification reaction portion, a thermal cracking portion and a shift reaction promotion portion are formed in this order from the lower toward the upper part of the gasification reactor, wherein the hydrocarbon based raw material supplied from the lower part is oxidized with the oxidant to produce mixed gas containing carbon dioxide and an excessive oxidant and generate reaction heat in the oxidization reaction portion, the hydrocarbon based raw material supplied from the upper part is cracked with heat generated in the lower part to produce cracked gas having hydrogen as a main component and residues having carbon as a main component in the thermal cracking portion, the residues flowing downward from the thermal cracking portion are made to react with the carbon dioxide produced in the oxidization reaction portion, the excessive oxidant and high-temperature and high-pressure water in under an atmosphere of temperature created by addition of the reaction heat to produce mixed gas containing carbon monoxide and hydrogen in the gasification reaction portion, the carbon monoxide is made to undergo an aqueous gas shift reaction with high-temperature and high-pressure water and thereby converted into hydrogen and carbon dioxide in the shift reaction promotion portion, and the resultant gas is taken out from the gasification reactor.

**22.** A method for gasifying a hydrocarbon based raw material according to claim 21, wherein a hydrocarbon based raw material having a lower heat generation rate or adjusted to have a lower heat generation rate, compared to the hydrocarbon based raw material supplied from the upper part of the gasification reactor, is supplied from the lower part of the gasification reactor.

**23.** A method for gasifying a hydrocarbon based raw material according to claim 21, wherein the supply rate of the oxidant is in the range of 0.5 to 1.5 to the amount of oxygen required for fully oxidizing the total amounts of residues flowing downward from the upper thermal cracking portion and the hydrocarbon based raw material supplied from the lower part.

**24.** A method for gasifying a hydrocarbon based raw material according to claim 21, wherein the temperature of the oxidization reaction portion is in the range of 400 to 1000°C, the temperature of the gasification reaction portion may be in the range of 600 to 1000°C, and the temperature of the thermal cracking portion is in the range of 600 to 800°C.

# FIG.1

EP 1 489 046 A1

# FIG.2

RAW MATERIAL

P 1

LINE MIXER

2

2c

(CRACKED RESIDUAL OIL)

2d

OXYGEN

3c

3 REACTOR

3a HIDROGENATION AND THERMAL CRACKING

PARTIAL COMBUSTION

3b

SOLID SEPARATOR

4

(SOLID CONTAINING V, Ni, etc.)

HEAT EXCHANGER

5

9 WATER SEPARATOR

6

7 DISTILLATION

71

72

73

(GAS) (C1∼C4+H2S)

(LIGHT OIL)

(CONDENSED WATER)

(CRACKED RESIDUAL OIL) TO PARTIAL COMBUSTION RAW MATERIAL

(CRACKED RESIDUAL OIL + WATER) TO PARTIAL COMBUSTION RAW MATERIAL

WATER

P 8

EP 1 489 046 A1

# FIG.3A

UPPER PART RAW MATERIAL

17

LOWER PART RAW MATERIAL (LOW QUALITY)

15

18 GASEOUS PRODUCT

13 SHIFT REACTION PROMOTION PORTION

20 GASIFICATION REACTOR

12 THERMAL CRACKING PORTION

11 GASIFICATION REACTION PORTION

10 OXIDZATION REACTION PORTION

16 OXIDANT

# FIG. 3B

UPPER PART RAW MATERIAL

17

LOWER PART RAW MATERIAL (LOW QUALITY)

15

18 GASEOUS PRODUCT + OIL PRODUCT

RAW MATERIAL (FOR PRODUCTION OF OIL)

12b THERMAL CRACKING PORTION (2)

12a THERMAL CRACKING HYDRO CRACKING PORTION (1)

11 GASIFICATION REACTION PORTION

10 OXIDZATION REACTION PORTION

16 OXIDANT

34

EP 1 489 046 A1

# FIG.3C

UPPER PART RAW MATERIAL
(FOR PRODUCTION OF OIL
+PRODUCTION OF LOWER
RESIDUES)

17

LOWER PART RAW
MATERIAL
(LOW QUALITY)

15

18 GASEOUS PRODUCT
+ OIL PRODUCT

12 THERMAL CRACKING
PORTION
(HYDROGENATION CRACKING
OCCURS IN LOWER PART)

11 GASIFICATION REACTION
PORTION

10 OXIDIZATION REACTION
PORTION

16 OXIDANT

35

# FIG.4

RAW MATERIAL (1)
(PRODUCTION OF
CRACKED OIL)

WATER

RAW MATERIAL (3)
(COMPLETE
COMBUSTION)

PRODUCT
(OIL + GAS)

WATER

RAW MATERIAL (2)
(PRODUCTION OF
CRACKED GAS (OR OIL)
+ PRODUCTION OF
RESIDUES)

4 4

4 1
SUPPLY NOZZLE

4 0
HEAT EXCHANGER

4 6
PRESSURE VESSEL

4 5
REACTION VESSEL

4 2
SUPPLY NOZZLE

OXIDANT (OXYGEN)

FIG.5

# FIG.6A

OXIDANT

16

30 PARTIAL COMBUSTION PORTION

11 GASIFICATION PORTION

13 GAS SHIFT REACTION PORTION

20

RAW MATERIAL + WATER

19

18 GASEOUS PRODUCT

# FIG.6B

OXIDANT

16

30 PARTIAL COMBUSTION PORTION

21 RAW MATERIAL OIL + WATER

12 THERMAL CRACKING PORTION + GAS SHIFT REACTION PORTION

20

RAW MATERIAL + WATER

19

GASEOUS PRODUCT + OIL PRODUCT

18

EP 1 489 046 A1

# FIG.7

RAW MATERIAL

OXIDANT (OXYGEN)

**53**
NOZZLE FOR PARTIAL
COMBUSTION
GASIFICATION

**30**
PARTIAL COMBUTION
PORTION

**52**

**51**
SUPPLY NOZZLE
FOR RAW MATERIAL
FOR THERMAL CRACKING

**47**

**46**
PRESSURE VESSEL

**40**
HEAT EXCHANGER

**12**
THERMAL CRACKING
PORTION

**45**
REACTION VESSEL

WATER

WATER

RAW MATERIAL FOR
THERMAL CRACKING

PRODUCT (OIL +GAS)

WATER

# FIG.8A

30

WATER

# FIG.8B

53

30

30

52 47 51

12 45

# FIG.8C

53 54 BACKFLOW PREVENTION

30

54

54

54

47

WATER

WATER

EP 1 489 046 A1

# FIG.9

OXIDANT   RAW MATERIAL

# FIG.10

# FIG.11

HEAVY OIL

201

202

202c

202d

OXYGEN

202b

203c

208

WATER

203
231
232
202a

203d

203a

204

SOLID
CONTAINING
V, Ni, etc.

205 206

207

DISTILLATION

272

273
271

GAS
(C₁~C₄+H₂S)

LIGHT OIL

CONDENSED
WATER

RESIDUES

203b

EP 1 489 046 A1

43

FIG.12

GAS
$(C_1 \sim C_4 + H_2S)$

LIGHT OIL

CONDENSED WATER

RESIDUES

SECOND HEAVY OIL

HEAVY OIL

OXYGEN

WATER

SOLID CONTAINING V, Ni, etc.

DISTILLATION

EP 1 489 046 A1

# FIG.13

203d

COOLING / WATER SEPA- RATION

GASEOUS PRODUCT
(PARTIALLY COMBUSTED
METHANOL PRODUCT
CRACKED DBT PRODUCT)

CONDENSED WATER
+
CRACKED DBT PRODUCT

203

231

232

203a

DBT SOLUTION
+ METHANOL
+ WATER

202a

FUEL FOR PARTIAL
COMBUSTION 202b
(METHANOL
+ WATER)

203b

OXIDANT

EP 1 489 046 A1

# FIG.14

# FIG.15

308 GASEOUS PRODUCT

313 SHIFT REACTION PROMOTION PORTION

303

307 UPPER PART RAW MATERIAL SUPPLY

312 THERMAL CRACKING PORTION

311 GASIFICATION REACTION PORTION

310 OXIDIZATION REACTION PORTION

OXIDANT 306

305 LOWER PART RAW MATERIAL SUPPLY

# FIG.16

EP 1 489 046 A1

# FIG.17

RAW MATERIAL → PRETREATMENT (310) → [307] → GASIFICATION (302) → [308] → WATER SEPARATION (303) → GASEOUS PRODUCT

305 → GASIFICATION

OXIDANT → [306] → GASIFICATION

WATER SEPARATION → WATER → RECYCLE PROCESSING (304) → PROCESSED WATER

EP 1 489 046 A1

# FIG.18

RAW MATERIAL → PRETREATMENT (301a) → 307 → GASIFICATION (302) → WATER SEPARATION (303) → GASEOUS PRODUCT

RAW MATERIAL → PRETREATMENT (301b) → 305 → GASIFICATION

OXIDANT → 306 → GASIFICATION

WATER SEPARATION → WATER → RECYCLE PROCESSING (304) → PROCESSED WATER

EP 1 489 046 A1

## INTERNATIONAL SEARCH REPORT

| International application No. |
| --- |
| PCT/JP02/08366 |

**A. CLASSIFICATION OF SUBJECT MATTER**
Int.Cl⁷ C01B3/02, C10J3/00, C10G9/00, 35/04

According to International Patent Classification (IPC) or to both national classification and IPC

**B. FIELDS SEARCHED**

Minimum documentation searched (classification system followed by classification symbols)
Int.Cl⁷ C01B3/02, C10J3/00, C10G9/00, 35/04

Documentation searched other than minimum documentation to the extent that such documents are included in the fields searched

| | | |
| --- | --- | --- |
| Jitsuyo Shinan Koho | 1922–1996 | Toroku Jitsuyo Shinan Koho 1994–2002 |
| Kokai Jitsuyo Shinan Koho | 1971–2002 | Jitsuyo Shinan Toroku Koho 1996–2002 |

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 2590051 B2 (Combustion Engineering, Inc.),<br>05 December, 1996 (05.12.96),<br>Claims; Figs. 1 to 3<br>& WO 94/16037 A1 & US 5620487 A<br>& US 5622534 A | 1–5<br>6,7<br>8–24 |
| Y | JP 10-237459 A (Mitsubishi Materials Corp.),<br>08 September, 1998 (08.09.98),<br>Abstract; Claims; Fig. 1<br>(Family: none) | 6 |
| Y | JP 2000-282063 A (Mitsubishi Materials Corp.),<br>10 October, 2000 (10.10.00),<br>Abstract; Claims; Fig. 1<br>(Family: none) | 6,7 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 November, 2002 (18.11.02) | Date of mailing of the international search report<br>03 December, 2002 (03.12.02) |
| --- | --- |
| Name and mailing address of the ISA/<br>Japanese Patent Office | Authorized officer |
| Facsimile No. | Telephone No. |

Form PCT/ISA/210 (second sheet) (July 1998)

**EP 1 489 046 A1**

### INTERNATIONAL SEARCH REPORT

| | International application No. |
|---|---|
| | PCT/JP02/08366 |

**C (Continuation). DOCUMENTS CONSIDERED TO BE RELEVANT**

| Category* | Citation of document, with indication, where appropriate, of the relevant passages | Relevant to claim No. |
|---|---|---|
| A | JP 09-188501 A (Masaru NAKAHARA),<br>22 July, 1997 (22.07.97),<br>Abstract; Claims 1, 2<br>(Family: none) | 1-24 |
| P,A | JP 2000-239672 A (Mitsubishi Materials Corp.),<br>05 September, 2000 (05.09.00),<br>Abstract; Claims; Figs. 1, 3<br>(Family: none) | 1-24 |
| P,A | JP 2001-026788 A (Mitsubishi Materials Corp.),<br>30 January, 2001 (30.01.01),<br>Abstract; Claims; Fig. 2<br>(Family: none) | 1-24 |
| P,A | JP 2002-105466 A (Osaka Gas Co., Ltd.),<br>10 April, 2002 (10.04.02),<br>Abstract; Claims 1 to 4; Fig. 1<br>(Family: none) | 1-24 |
| P,X<br>P,A | JP 2001-279266 A (Mitsubishi Heavy Industries,<br>Ltd.),<br>10 October, 2001 (10.10.01),<br>Abstract; Claims 1, 4; Par. No. [0020]; Fig. 5<br>(Family: none) | 1,2<br>3-24 |

Form PCT/ISA/210 (continuation of second sheet) (July 1998)